# EUROPÄISCHE PATENTSCHRIFT

(11) **EP 3 190 015 B1**
(45) Veröffentlichungstag und Bekanntmachung des Hinweises auf die Patenterteilung: **03.10.2018**
(21) Anmeldenummer: 16195597.6
(22) Anmeldetag: 25.10.2016
(51) Int. Cl.: B60T 7/20, B60T 13/04, B60T 13/58, B60T 15/02, B60T 15/36, B60T 17/04

(54) **BREMSEINRICHTUNG EINES ZUGFAHRZEUGS UND GRUPPE VON BREMSEINRICHTUNGEN**
BRAKE DEVICE FOR A TRACTOR AND GROUP OF SUCH DEVICES
INSTALLATION DE FREINAGE POUR UN TRACTEUR ET GROUPE DE TELLES INSTALLATIONS

(30) Priorität: 08.01.2016 EP 16150533
(43) Veröffentlichungstag der Anmeldung: 12.07.2017
(73) Patentinhaber: Haldex Brake Products Aktiebolag, 261 24 Landskrona (SE)
(72) Erfinder: Kraus, Alexander, Nuneaton, CV11 6YL (GB); Hawkes, Brian, Staffordshire, B77 1HS (GB)
(74) Vertreter: REHBERG HÜPPE + PARTNER

(56) Entgegenhaltungen:
- EP-A2- 2 631 131
- EP-B1- 2 165 901
- DE-A1-102009 032 313

## Beschreibung

### TECHNISCHES GEBIET DER ERFINDUNG

Die Erfindung betrifft eine Bremseinrichtung für ein Zugfahrzeug (insbesondere ein Schlepper, ein landwirtschaftliches Zugfahrzeug, ein Traktor oder ein leichtes hydraulisch gebremstes Geländefahrzeug, welche mit Druckluftanlagen für Anhänger ausgestattet sind oder nachgerüstet werden, einen schnellen hydraulisch gebremsten Transporter mit pneumatisch gebremsten Anhängern o. ä). Des Weiteren betrifft die Erfindung eine Gruppe derartiger Bremseinrichtungen.

### STAND DER TECHNIK

Anhänger mit pneumatischer Bremsanlage sind üblicherweise über einen Kupplungskopf Vorrat sowie einen Kupplungskopf Bremse pneumatisch mit einem Zugfahrzeug gekoppelt. Der Kupplungskopf Vorrat dient hierbei der Bereitstellung eines Vorrats- oder Versorgungsdrucks für den Anhänger, während der Kupplungskopf Bremse der Übertragung eines pneumatischen Bremsdrucks entsprechend dem vorzugsweise vom Fahrer (bspw. über ein Bremspedal) vorgegebenen Bremswunsch über eine Bremssteuerleitung dient mit dem Ziel, die Abbremsung des Anhängers an die Abbremsung des Zugfahrzeugs anzupassen. Bei einem Abriss der über den Kupplungskopf Bremse gekoppelten Bremssteuerleitung des Zugsfahrzeugs oder des Anhängers oder einer anderweitigen Leckage ist die pneumatische Übertragung des pneumatischen Bremsdrucks und damit des Bremswunsches von dem Zugfahrzeug zu dem Anhänger nicht mehr möglich, womit auch eine Abbremsung des Anhängers ohne Weiteres nicht mehr möglich ist. Kommt es gleichzeitig zu einem Abriss auch der mechanischen Kupplung zwischen Anhänger und Zugfahrzeug, würde sich der Anhänger (ohne Einsatz eines im folgenden beschriebenen Anhängerbremsventils mit Notbremsfunktion) frei und ungebremst bewegen, womit dieser beträchtlichen Schaden anrichten kann. Um dies zu vermeiden, werden pneumatische Bremseinrichtungen eines Anhängers mit einem Anhängerbremsventil ausgestattet, welches über eine Notbremsfunktion verfügt. Die Notbremsfunktion führt bei Einbruch des Drucks in der Vorratsleitung insbesondere infolge einer Leckage derselben oder infolge eines Abrisses eines Kupplungskopfs Vorrat automatisch eine Notbremsung herbei. Auch wenn die Vorratsleitung intakt ist, führt der Abriss der Bremssteuerleitung oder eine anderweitige Leckage im Bereich derselben dazu, dass Druckluft eines dem Anhängerbremskreis zugeordneten Vorratsbehälters des Zugfahrzeugs über die abgerissene Bremssteuerleitung oder die Leckage in derselben entweicht, womit es dann auch zu einem Druckabfall in der Vorratsleitung kommt, welcher dann die Notbremsfunktion auslösen kann. Hierbei hängt der Zeitpunkt des Auslösens der Notbremsfunktion des Anhängers grundsätzlich von der Schnelligkeit der Entlüftung des Vorratsbehälters ab.

Für Zugfahrzeuge mit pneumatischer Bremsanlage, insbesondere Lastkraftwagen, finden sogenannte Abrissventile Einsatz, die grundsätzlich ungedrosselt den Vorratsbehälter des Zugfahrzeugs mit dem Kupplungskopf Vorrat verbinden. Bei einem Abriss der Bremssteuerleitung oder einer Leckage in dieser schaltet das Abrissventil um in eine zweite Betriebsstellung, in welcher der Vorratsbehälter z. B. über eine Drossel mit dem Kupplungskopf Vorrat verbunden ist. Kommt es dann zu einem Druckluftverbrauch, insbesondere infolge des Entweichens eines vom Anhängersteuerventil erzeugten Bremssteuerdrucks über die Abrissstelle oder Leckage, hat dies eine gedrosselte Nachführung von Druckluft zu der Vorratsleitung über die Drossel des Abrissventils zur Folge, welche auch zu einem Druckabfall an dem Vorratsanschluss des Anhängerbremsventils führt, womit die Notbremsfunktion des Anhängerbremsventils ausgelöst wird. Hierbei kann konstruktiv durch die Wahl des Drosselquerschnitts vorbestimmt werden, wie schnell bei einem Defekt in der Bremssteuerleitung die Entlüftung erfolgt und damit das Auslösen der Notbremsfunktion erfolgt.

Aus einer Einbauanleitung des Unternehmens Graubremse GmbH aus dem Jahr 1977 mit der Bezeichnung "*G 813: 2*/*2-Wegeventil pneum. betätigt mit Drosselstellung NW 7*/*NW 2*" ist ein Abrissventil in Schieberbauart bekannt, bei welchem ein Vorratsanschluss, der mit einem Vorratsbehälter des Zugfahrzeugs verbindbar ist, und ein Ausgangsanschluss für einen Kupplungskopf Vorrat je nach Betriebsstellung eines Ventilkörpers ungedrosselt oder gedrosselt miteinander verbunden sind. Hierbei wird der Ventilkörper über eine Feder in eine erste Betriebsstellung beaufschlagt. In der ersten Betriebsstellung ist der Vorratsanschluss ungedrosselt mit dem Ausgangsanschluss für den Kupplungskopf Vorrat verbunden ist. Die erste Betriebsstellung wird dabei unabhängig davon eingenommen, ob eine Betriebsbremsung erfolgt oder nicht. Die beiden Stirnflächen des Ventilkörpers bilden jeweils entgegengesetzt zueinander wirkende Steuerflächen aus. Auf eine erste Steuerfläche, deren Wirkrichtung mit einer Erhöhung der Beaufschlagung der Feder korreliert, wirkt der pneumatische Bremsdruck eines pneumatischen Betriebsbremskreises des Zugfahrzeugs, während auf die andere zweite Steuerfläche der von dem Anhängersteuerventil ausgesteuerte und für die Bremssteuerleitung mit dem Kupplungskopf Bremse bestimmte pneumatische Bremsdruck wirkt. Ohne Abriss der Bremssteuerleitung heben sich die auf die Steuerflächen wirkenden Kräfte (teilweise oder vollständig) auf, sodass die Feder den Ventilkörper in der ungedrosselten ersten Betriebsstellung hält, was unabhängig davon ist, ob eine Betätigung der Betriebsbremse erfolgt oder nicht. Bricht hingegen der pneumatische Bremsdruck in der Bremssteuerleitung infolge eines Abrisses ein, wird die zweite Steuerfläche entlüftet. Der auf die erste Steuerfläche wirkende pneumatische Bremsdruck des Zugfahrzeugs überführt bei einer Betätigung der Betriebsbremse dann den Ventilkörper entgegen der Wirkung der Feder in die zweite Betriebsstellung, in welcher eine Drossel wirksam ist. Damit erfolgt lediglich eine gedrosselte Nachfüllung der Druckluftanlage des Anhängers, welche einer gleichzeitigen Entlüftung durch die defekte Bremssteuerleitung entgegenwirkt, so dass es zu einem Druckabfall kommt, dessen Schnelligkeit von der Drosselcharakteristik der Drossel abhängt.

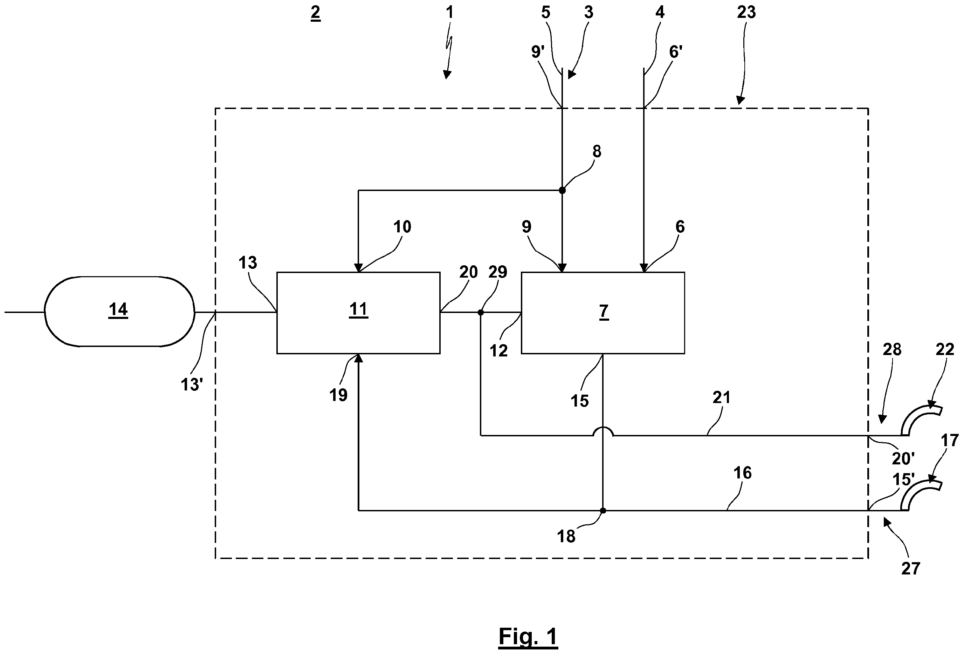

Aus der nicht vorveröffentlichten europäischen Patentanmeldung EP 15 177 950.1 ist eine Bremseinrichtung 1 gemäß Fig. 1 für eine Bremsanlage eines Zugfahrzeug 2, insbesondere einen Schlepper oder Traktor, bekannt.
Das Zugfahrzeug 2 weist eine hier zweikreisige hydraulische Bremsanlage 3 auf, von der in Fig. 1 lediglich die beiden hydraulischen Bremsleitungen 4, 5, die den beiden Kreisen zugeordnet sind, dargestellt sind. Die hydraulische Bremsleitung 4 ist mit einem hydraulischen Steueranschluss 6 eines Anhängersteuerventils 7 verbunden. Über eine Verzweigung 8 ist die hydraulische Bremsleitung 5 sowohl mit einem hydraulischen Steueranschluss 9 des Anhängersteuerventils 7 als auch einem hydraulischen Steueranschluss 10 eines Abrissventils 11 verbunden. Das Abrissventil 11 verfügt über einen Vorratsanschluss 13, der aus einem Vorratsbehälter 14 mit Druckluft versorgt wird. Das Anhängersteuerventil 7 verfügt über einen Ausgangsanschluss 15, an welchem über eine Bremssteuerleitung 16 ein Kupplungskopf Bremse 17 angeschlossen ist. Über eine Verzweigung 18 ist an den Ausgangsanschluss 15 des Anhängersteuerventils 7 auch ein pneumatischer Steueranschluss 19 des Abrissventils 11 angeschlossen. Das Abrissventil 11 verfügt über einen Ausgangsanschluss 20, der über eine Vorratsleitung 21 mit dem Kupplungskopf Vorrat 22 verbunden ist. Des Weiteren ist der Ausgangsanschluss 20 des Abrissventils 11 über eine Verzweigung 29 mit einem Anschluss 12 des Anhängersteuerventils 7 verbunden. Eine Versorgung des Anhängersteuerventils 7 aus dem Vorratsbehälter 14 erfolgt somit über das Abrissventil 11 und parallel zu der Versorgung des Kupplungskopf Vorrats 22.

Möglich ist, dass in der Bremseinrichtung 1 das Anhängersteuerventil 7 und Abrissventil 11 als singuläre Bauelemente mit einzelnen Gehäusen bei beabstandeter Anordnung derselben ausgebildet sind. Für das in Fig. 1 dargestellte Ausführungsbeispiel sind das Anhängersteuerventil 7 und das Abrissventil 11 in eine integrale Bremseinrichtung 1, hier eine Zugfahrzeug-Ventileinheit 23, integriert. Hierbei kann die Zugfahrzeug-Ventileinheit 23 modular ausgebildet sein, wobei das Anhängersteuerventil 7 und das Abrissventil 11 jeweils ein Modul bilden, die beispielsweise aneinander angeflanscht werden. Möglich ist aber auch, dass das Anhängersteuerventil 7 und das Abrissventil 11 in einem gemeinsamen Gehäuse aufgenommen sind. Die Zugfahrzeug-Ventileinheit 23 bildet in diesem Fall den hydraulischen Steueranschluss 6', den hydraulischen Steueranschluss 9', den Ausgangsanschluss 15', den Ausgangsanschluss 20', sowie den Vorratsanschluss 13' aus, über welche die Zugfahrzeug-Ventileinheit 23 (hier ausschließlich) mit benachbarten hydraulischen und pneumatischen Komponenten kommuniziert. Möglich ist aber auch, dass in die Zugfahrzeug-Ventileinheit 23 elektronische Steuerelemente wie eine elektronische Steuereinheit und/oder elektromagnetische Ventileinheiten integriert sind, wobei in diesem Fall die Zugfahrzeug-Ventileinheit 23 einen elektronischen Steueranschluss oder einen Anschluss für ein Bussystem wie CAN besitzen kann. Durchaus möglich ist des Weiteren, dass über innere Kanäle oder Leitungen ein mit einem Strich gekennzeichneter Anschluss 6', 9', 13', 15', 20' mit einem ohne Strich gekennzeichneten Anschluss 6, 9, 10, 13, 15, 20 des integrierten Anhängersteuerventils 7 und/oder Abrissventils 11 verbunden ist.

Die Funktionsweise der Bremseinrichtung 1 ist wie folgt: Zur Erzeugung einer Bremswirkung wird mindestens ein hydraulischer Bremsdruck in den hydraulischen Bremsleitungen 4, 5 erzeugt, mittels dessen hydraulische Brems-Aktuatoren des Zugfahrzeugs 2 betätigt werden. Möglich ist hierbei, dass der hydraulische Bremsdruck in den hydraulischen Bremsleitungen 4, 5 vorgegeben wird von dem Fahrer, beispielsweise über mindestens ein Bremspedal. Alternativ oder kumulativ möglich ist, dass eine automatische Erzeugung eines hydraulischen Bremsdrucks, insbesondere mit einer elektronischen Steuereinheit, erfolgt.

Aus den dem Anhängersteuerventil 7 über die hydraulischen Steueranschlüsse 6, 9 zugeführten Bremsdrücken erzeugt das Anhängersteuerventil 7 einen an dem Ausgangsanschluss 15 ausgesteuerten pneumatischen Bremssteuerdruck, welcher über die Bremssteuerleitung 16 dem Kupplungskopf Bremse 17 zugeführt wird. An den Kupplungskopf Bremse 17 ist ein entsprechender Gegen-Kupplungskopf des Anhängers angeschlossen, womit dann der pneumatischen Bremsanlage des Anhängers, welche Bestandteil der Bremseinrichtung 1 ist, der Bremssteuerdruck zugeführt wird. Das Anhängersteuerventil 7 erzeugt hierbei vorzugsweise einen Bremssteuerdruck derart, dass die an dem Anhänger herbeigeführte Bremswirkung der Bremswirkung des Zugfahrzeugs 2 entspricht. Zur Herbeiführung einer Streckbremsfunktion, die automatisch oder durch den Fahrer ausgelöst werden kann, kann das Anhängersteuerventil 7 auch temporär eine größere Bremswirkung an dem Anhänger herbeiführen als an dem Zugfahrzeug 2. Ebenfalls möglich ist, dass, u. U. verursacht durch den Fahrer oder eine elektronische Steuereinheit, eine Prüffunktion bei stehendem Fahrzeug ausgeführt wird, bei welcher das Zugfahrzeug 2 gebremst wird, während der Anhänger nicht gebremst wird.

Auf an sich bekannte Weise kann die Abhängigkeit des Bremssteuerdrucks an dem Ausgangsanschluss 15 von den hydraulischen Bremsdrücken an den Steueranschlüssen 6, 9 und weiteren Betriebsbedingungen angepasst werden, wenn ein weiterer pneumatischer Steueranschluss, insbesondere zur Herbeiführung einer sogenannten Voreilung, vorhanden ist. Ebenfalls möglich ist, dass eine Modifikation eines pneumatischen Steuerdrucks des Anhängersteuerventils 7 über ein elektronisch gesteuertes Steuerventil erfolgt und/oder das Anhängersteuerventil 7 einen von einer elektronischen Steuereinrichtung angesteuerten elektrischen Steueranschluss besitzt, vgl. insbesondere EP 2 165 901 B1 und EP 2 305 524 B1.

Die Bremssteuerleitung 16 ist mit einem Bremsleitungsteil 27, dem Kupplungskopf Bremse 17, dem Gegenkupplungskopf Bremse (nicht dargestellt) und dem anhängerseitigen Teil der Bremssteuerleitung (nicht dargestellt) gebildet. Die Vorratsleitung 16 ist mit einem Vorratsleitungsteil 28, dem Kupplungskopf Vorrat 22, dem Gegenkupplungskopf Vorrat (nicht dargestellt) und dem anhängerseitigen Teil der Vorratsleitung (nicht dargestellt) gebildet.

Kommt es zu einem Defekt in der Bremssteuerleitung 16, worunter bspw. ein Abriss des Kupplungskopfs 17 in dem anhängerseitigen Teil der Bremssteuerleitung verstanden wird, kommt es im Fall einer Bremsbetätigung mit einer Öffnung des Anhängersteuerventils 7 zu einer Entlüftung der Vorratsleitung 21 durch das Anhängersteuerventil 7 hindurch über den Defekt in der Bremssteuerleitung 16, womit grundsätzlich ein schneller Abfall des Drucks in der Vorratsleitung 21 möglich wäre mit einer entsprechend schnellen Aktivierung der Notbremsfunktion des Anhängerbremsventils. Allerdings ist die Vorratsleitung 21 auch über das Abrissventil 11 mit dem Vorratsbehälter 14 verbunden, womit eine Nachspeisung von Druckluft aus dem Vorratsbehälter 14 in die Vorratsleitung 21 erfolgt. Die Schnelligkeit des Abfalls des Drucks in der Vorratsleitung 21 ergibt sich somit aus der Differenz der über den Defekt in der Bremssteuerleitung 16 entweichenden Druckluft und der aus dem Vorratsbehälter 14 nachgeführten Druckluft. Ist in dem Defektfall eine zweite Betriebsstellung des Abrissventils 11 wirksam, in welcher die Nachspeisung der Druckluft aus dem Vorratsbehälter 14 in die Vorratsleitung 21 unter Zwischenordnung einer Drossel erfolgt, führt diese gedrosselte Nachspeisung zu einem schnelleren Abfall des Drucks in der Vorratsleitung 21, womit ein früheres Ansprechen der Notbremsfunktion des Anhängerbremsventils des Anhängers herbeigeführt werden kann. Letztendlich kann somit über die Vorgabe der Drosselwirkung in der zweiten Betriebsstellung des Abrissventils 11 der Abfall des Drucks in der Vorratsleitung 21 und die Schnelligkeit des Ansprechens der Notbremsfunktion des Anhängers konstruktiv vorgegeben werden.

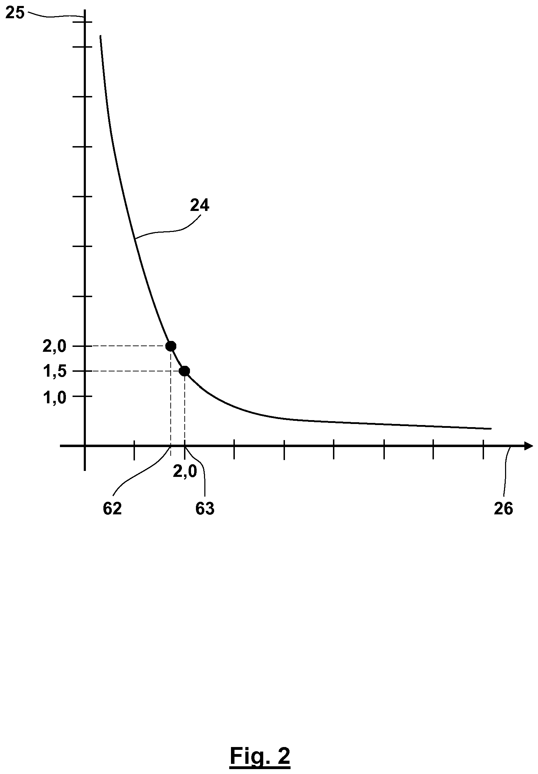

**Fig. 2** zeigt einen Verlauf 24 des Drucks 25 in der Vorratsleitung 21 über der Zeit 26 bei einem Defekt in der Bremssteuerleitung 16. Hierbei sind die Steigung und die Kurvenform des Verlaufs 24 abhängig von der Drosselwirkung des Abrissventils 11 in der zweiten Betriebsstellung.
In der Norm "*Delegierte Verordnung*" der Europäischen Kommission 2015/68 vom 15.10.2014, veröffentlicht am 23.01.2015 im Amtsblatt der Europäischen Union, ist für den Verlauf 24 vorgeschrieben, dass der Druck in der Vorratsleitung 21 innerhalb von zwei Sekunden auf einen Wert von 150 kPa (1,5 bar) abfallen muss. Des Weiteren muss das Auslösen der Notbremsfunktion des Anhängers einsetzen, bevor der Druck in der Vorratsleitung auf 200 kPa (2,0 bar) abgefallen ist, sofern der Druck in der Vorratsleitung um mindestens 100 kPa (1,0 bar) pro Sekunde sinkt. Die Auslegung der Drosselwirkung in der zweiten Betriebsstellung erfolgt derart, dass der Abfall des Drucks in der Vorratsleitung mit der vorgeschriebenen Geschwindigkeit und innerhalb der vorgegebenen Zeitspanne erfolgen kann.

Zu erkennen ist in Fig. 2, dass mit dem Unterschreiten eines Drucks von 2,0 bar zu einem Zeitpunkt 62 < 2 Sek. eine Auslösung der Notbremsfunktion mit der Initiierung der automatischen Bremsung des Anhängers erfolgt. Zu dem Zeitpunkt 63, welcher spätestens nach 2 Sek. erreicht sein muss, ist der Druck von 1,5 bar erreicht.

Die nicht vorveröffentlichte europäische Patentanmeldung EP 15 177 950.1 offenbart unterschiedliche konstruktive Ausführungsformen eines Abrissventils 11, dessen Betriebsstellung gegen die Beaufschlagung durch eine Feder über einen Adapterkolben veränderbar ist, wobei der Adapterkolben mit dem hydraulischen Bremsdruck beaufschlagt ist. Um eine Anpassung des Abrissventils 11 an unterschiedliche hydraulische Bremsdrücke in Zugfahrzeugen unterschiedlicher Typen vorzunehmen, finden unterschiedliche Adapterkolben mit unterschiedlichen Adapterkolbenflächen Einsatz, auf welche die unterschiedlichen hydraulischen Bremsdrücke einwirken.
EP 2 631 131 A2 offenbart ein landwirtschaftliches Zugfahrzeug, welches eine hydraulische Bremsanlage sowie eine pneumatische Bremsanlage für einen mit dem Zugfahrzeug koppelbaren Anhänger aufweist. In Abhängigkeit des hydraulischen Drucks in der hydraulischen Bremsanlage steuert ein Anhängersteuerventil einen Bremssteuerdruck für den Anhänger an einem Kupplungskopf Bremse. Eine Versorgungsleitung versorgt über ein Magnetventil und eine dem Magnetventil nachgeordnete Verzweigung einerseits einen Versorgungsanschluss des Anhängersteuerventils und andererseits einen Kupplungskopf Vorrat. Das Magnetventil befindet sich stromlos in einer Durchlassstellung, während dieses mit elektrischer Beaufschlagung durch die Steuereinheit eine Drosselstellung einnehmen kann. Ein Abriss des Kupplungskopfs Vorrat oder eine Leckage in einer zugeordneten Vorratsleitung wird erkannt durch einen Druckabfall in der zu dem Kupplungskopf Vorrat führenden Leitung, der über einen Sensor erfasst wird. Erkennt die Steuereinheit auf Grundlage des Messsignals des Sensors einen derartigen Druckabfall, wird das Magnetventil von der Steuereinheit in die Drosselstellung überführt.

### AUFGABE DER ERFINDUNG

Der vorliegenden Erfindung liegt die Aufgabe zugrunde, eine Bremseinrichtung für ein Zugfahrzeug, insbesondere einen Traktor, vorzuschlagen, welche hinsichtlich
- der Einbaumöglichkeiten für unterschiedliche Typen von Zugfahrzeugen,
- unterschiedlicher hydraulischer Bremsdrücke der hydraulischen Bremsanlage des Zugfahrzeugs,
- der zuverlässigen Erkennung eines Defekts in einer Bremssteuerleitung oder eines Kupplungskopfs Bremse, wobei die zuverlässige Erkennung insbesondere auch bei Schwankungen der hydraulischen Bremsdrücke gewährleistet sein soll,
- der Verringerung der Bauteilvielfalt,
- der Vermeidung von Rückwirkungen der Bremseinrichtungen auf die hydraulische Bremsanlage des Zugfahrzeugs und/oder
- des Betriebs mit unterschiedlichen hydraulischen Medien, bspw. Bremsflüssigkeiten oder Mineralöl

verbessert ist. Des Weiteren liegt der Erfindung die Aufgabe zugrunde, eine Gruppe von Bremseinrichtungen vorzuschlagen, die hinsichtlich des Einsatzes für Zugfahrzeuge unterschiedlicher Typen und/oder der Verringerung der Bauteilvielfalt verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die erfindungsgemäße Bremseinrichtung kann über ein Anhängersteuerventil verfügen, welches in an sich bekannter Weise einen pneumatischen Bremssteuerdruck für einen Anhänger erzeugt, welcher von einem hydraulischen Bremsdruck der hydraulischen Bremsanlage des Zugfahrzeugs abhängig ist. Durchaus möglich ist, dass in das Anhängersteuerventil Zusatzfunktionen integriert sind, wie bspw. eine Erzeuge einer Voreilung, eine Beeinflussung des Bremssteuerdrucks bspw. durch eine elektropneumatische Steuerung u. ä. (vgl. bspw. die Druckschriften EP 2 165 901 B1 und EP 2 305 524 B1).

Die erfindungsgemäße Bremseinrichtung verfügt über ein Abrissventil, welches zwischen einem Kupplungskopf Vorrat und einer Druckquelle, insbesondere einem Vorratsbehälter des Zugfahrzeugs, angeordnet ist. Das Abrissventil weist eine erste Betriebsstellung und eine zweite Betriebsstellung auf. Ein Drosselquerschnitt des Abrissventils ist in der zweiten Betriebsstellung kleiner als in der ersten Betriebsstellung (wovon auch umfasst sein soll, dass in der ersten Betriebsstellung keine Drosselung erfolgt und/oder in der zweiten Betriebsstellung eine Sperrung erfolgt). Wie dieses grundsätzlich für den eingangs genannten Stand der Technik der Fall ist, kann in einer Abrisssituation durch Herbeiführung der zweiten Betriebsstellung mit dem wirksamen kleineren Drosselquerschnitt eine Nachförderung von Druckluft zu dem Kupplungskopf Vorrat so weit gedrosselt werden, dass diese Nachförderung geringer ist als die über das Anhängersteuerventil und die defekte Bremssteuerleitung oder den abgerissenen Kupplungskopf Bremse entweichende Druckluft. Dies hat letzten Endes zur Folge, dass die pneumatische Anhängerbremsanlage entlüftet wird, womit eine Notbremsfunktion der Anhängerbremsanlage ausgelöst wird mit automatischer Betätigung der Bremsen. Hierbei hängt die Schnelligkeit der Auslösung der Notbremsfunktion ab von dem Drosselquerschnitt des Abrissventils in der zweiten Betriebsstellung.
Die Erfindung beruht zunächst auf der Erkenntnis, dass für die Bremseinrichtung gemäß der nicht vorveröffentlichten europäischen Patentanmeldung EP 15 177 950.1 in einem Abrissventil ein einziger Ventilkörper oder mehrere mechanisch miteinander gekoppelte Ventilkörper, welche an der Umschaltung des Abrissventils zwischen den beiden Betriebsstellungen beteiligt sind, einerseits im Bereich einer Kolbenfläche mit dem Bremssteuerdruck und andererseits im Bereich einer anderen Kolbenfläche mit dem hydraulischen Bremsdruck beaufschlagt sind. Dies hat zur Folge, dass die Stellwege der pneumatischen Kolbenfläche und der hydraulischen Kolbenfläche miteinander korrelieren und insbesondere gleich groß sind. Ist für den Stellweg des Ventilelements mit der pneumatischen Kolbenfläche zur Veränderung der Betriebsstellung, also zur Umschaltung in die gedrosselte Betriebsstellung, ein verhältnismäßig großer Stellweg erforderlich, ist hiermit auch ein entsprechend großer Stellweg der hydraulisch beaufschlagten Kolbenfläche verbunden. Eine Bewegung der hydraulischen Kolbenfläche über diesen großen Stellweg hat eine Veränderung des Volumens des hydraulischen Bremskreises zur Folge, welche durch ein entsprechendes Volumen eines Ausgleichsbehälters des hydraulischen Bremskreises berücksichtigt werden muss, womit die Bauraumanforderungen erhöht werden. Des Weiteren kann die Volumenänderung eine Veränderung des Drucks in dem hydraulischen Bremskreis zur Folge haben, womit die an dem Zugfahrzeug herbeigeführte hydraulische Bremswirkung von der gewünschten Bremswirkung abweichen kann. Werden zwei parallele hydraulische Bremskreise über separate Pedale von dem Fahrzeug zur gezielten Herbeiführung einer Lenkbremsung gesteuert, kann die genannte Volumenänderung in einem hydraulischen Bremskreis dazu führen, dass sich eine Abweichung von dem vom Fahrer vorgegebenen Lenkverhalten ergibt.

Ein anderes mögliches Problem bei einer Bremseinrichtung gemäß der nicht vorveröffentlichten europäischen Patentanmeldung EP 15 177 950.1 ist, dass hier die Umschaltung des Abrissventils in Abhängigkeit von der Druckdifferenz an der pneumatischen Kolbenfläche und an der hydraulischen Kolbenfläche erfolgt. Hierbei erfolgt die Auslegung der Umschaltcharakteristik derart, dass bei einem Defekt in der Bremssteuerleitung der an der hydraulischen Kolbenfläche unverändert anliegende Druck zur Herbeiführung einer Vollbremsung zu einer Kraft führt, welche gegenüber dem verminderten Druck an der pneumatischen Kolbenfläche infolge des Defekts in der Bremssteuerleitung überwiegt, womit die Umschaltkraft zur Herbeiführung der zweiten Betriebsstellung des Abrissventils erzeugt wird. Im Betrieb des Zugfahrzeugs kann es aber zu Druckschwankungen kommen, welche auch zu einer Umschaltung des Abrissventils in die zweite Betriebsstellung führen, wenn kein Defekt im Bereich der Bremssteuerleitung vorliegt. Um lediglich ein Beispiel zu nennen, kann bei übermäßiger Betätigung des Bremspedals durch den Fahrer in dem hydraulischen Bremskreis und damit an der hydraulischen Kolbenfläche ein Druck erzeugt werden, welcher ein Vielfaches des erforderlichen hydraulischen Drucks für die Herbeiführung einer Vollbremsung ist. Der von dem Anhängersteuerventil daraufhin ausgesteuerte pneumatische Bremssteuerdruck für den Anhänger steigt dann aber nicht auf ein Vielfaches an, sondern entspricht dem maximalen, für eine Vollbremsung des Anhängers erforderlichen pneumatischen Druck. Auch in diesem Fall überwiegt somit die an der hydraulischen Kolbenfläche erzeugte Kraft, so dass eine Umschaltung des Abrissventils in die zweite Betriebsstellung erfolgt, ohne dass dies erforderlich wäre.
Sowohl im Stillstand des Zugfahrzeugs, beispielsweise bei leerer pneumatischer Bremsanlage des Anhängers, als auch im Fahrbetrieb führt eine derartige unerwünschte Überführung des Abrissventils in die zweite Betriebsstellung dazu, dass eine Befüllung oder Nachfüllung der pneumatischen Bremsanlage des Anhängers infolge der Drosselung verzögert wird. Schlimmstenfalls kann die unerwünschte Umschaltung des Abrissventils in die zweite Betriebsstellung auch zum Auslösen einer unerwünschten Notbremsung des Anhängers über das Anhängerbremsventil führen.
Diesen Erkenntnissen trägt die Erfindung dadurch Rechnung, dass anstelle der Verwendung eines Abrissventils mit einer hydraulischen Kolbenfläche und einer pneumatischen Kolbenfläche, welche mechanisch miteinander gekoppelt sind, dem Abrissventil ein Ventil vorgeordnet wird. Die Betriebsstellung dieses Ventils ist (unmittelbar oder mittelbar) von dem hydraulischen Bremsdruck eines hydraulischen Bremskreises abhängig. Das Abrissventil und das dem Abrissventil vorgeordnete Ventil sind hierbei mechanisch voneinander entkoppelt. Das dem Abrissventil vorgeordnete Ventil ist vielmehr pneumatisch mit dem Abrissventil gekoppelt, indem das Ventil mit einem pneumatischen Steueranschluss des Abrissventils verbunden ist. In Abhängigkeit des an dem Steueranschluss des Abrissventils anliegenden Drucks, also in Abhängigkeit von der Betriebsstellung des dem Abrissventil vorgeordneten Ventils, ist erfindungsgemäß das Abrissventil in die zweite Betriebsstellung steuerbar.

Infolge der mechanischen Entkopplung des Abrissventils und des dem Abrissventil vorgeordneten Ventils können insbesondere die Stellwege des Abrissventils und des diesem vorgeordneten Ventils unabhängig voneinander gestaltet werden. Für den Fall, dass das dem Abrissventil vorgeordnete Ventil eine hydraulische Kolbenfläche für die Beaufschlagung mit dem hydraulischen Bremsdruck aufweist, kann der Stellweg dieser Kolbenfläche so klein gehalten werden, dass sich keine erhöhten Anforderungen an ein Ausgleichsvolumen für den hydraulischen Bremskreis ergeben und Rückwirkungen einer Veränderung der Betriebsstellung des dem Abrissventil vorgeordneten Ventils auf die Druckverhältnisse in dem hydraulischen Bremskreis zumindest reduziert sind. Andererseits kann für die Umschaltung des dem Abrissventil vorgeordneten Ventils ein Schwellwert des hydraulischen Bremsdrucks genutzt werden, mit dessen Überschreitung die Umschaltung erfolgt. In diesem Fall können auch Vervielfältigungen des hydraulischen Bremsdruckes über den Bremsdruck, welcher für eine Vollbremsung erforderlich ist, nach der Umschaltung des dem Abrissventil vorgeordneten Ventils nicht weiter die Betriebsstellung dieses Ventils beeinflussen, womit auch der von diesem Ventil ausgesteuerte und dem pneumatischen Steueranschluss des Abrissventils zugeführte Druck nicht von überhöhten hydraulischen Bremsdrücken abhängt und eine Herbeiführung der zweiten Betriebsstellung des Abrissventils infolge eines überhöhten hydraulischen Bremsdruckes zuverlässig vermieden ist.

Für die Ausgestaltung des dem Abrissventil vorgeordneten Ventils gibt es im Rahmen der Erfindung vielfältige Möglichkeiten.

Gemäß einer von der Erfindung umfassten ersten Variante ist das dem Abrissventil vorgeordnete Ventil ein elektropneumatisches Ventil. Das elektropneumatische Ventil kann infolge der Beaufschlagung mit einem elektrischen Steuersignal seine Betriebsstellung verändern, wobei hier das elektrische Steuersignal in Abhängigkeit von dem hydraulischen Bremsdruck erzeugt wird.

Für die Erzeugung des elektrischen Steuersignals gibt es unterschiedliche Möglichkeiten. Für einen Vorschlag der Erfindung wird das Steuersignal über einen (passiven) elektrischen Steuerkreis gesteuert, welcher somit keine elektronische Steuereinheit aufweist. In einem derartigen elektrischen Steuerkreis kann dann ein Schalter angeordnet sein, welcher einen Steueranschluss aufweist, der mit einer hydraulischen Bremsleitung verbunden ist. Überschreitet der hydraulische Bremsdruck in der hydraulischen Bremsleitung und damit auch an dem Steueranschluss einen von dem Schalter vorgegebenen Schwellwert, kann das Steuersignal erzeugt werden, womit dann die Umschaltung des dem Abrissventil vorgeordneten Ventils erfolgt. Alternativ oder zusätzlich kann in dem elektrischen Steuerkreis auch ein Schalter vorhanden sein, der einen Steueranschluss aufweist, der mit der pneumatischen Bremssteuerleitung für den Anhänger verbunden ist. Bei gleichzeitiger Verwendung der beiden vorgenannten Schalter hängt die Erzeugung des Steuersignals somit sowohl von dem hydraulischen Bremsdruck, also der Betätigung des Bremspedals, als auch von dem pneumatischen Bremssteuerdruck, also der Erzeugung einer Bremswirkung an dem Anhänger, ab. Um lediglich ein nicht beschränkendes Beispiel zu nennen, kann die Wirkung der beiden Schalter derart invertiert werden, dass das Steuersignal zur Umschaltung des dem Abrissventil vorgeordneten Ventils nur dann erzeugt wird, wenn einerseits der hydraulische Bremsdruck an dem Steueranschluss des ersten Schalters einen Schwellwert überschreitet, aber der pneumatische Bremssteuerdruck an dem Steueranschluss des zweiten Schalters infolge eines Defekts einen Schwellwert nicht überschreitet. Mit einem derartigen passiven Steuerkreis ist eine einfache, kostengünstige und dennoch zuverlässige Lösung gegeben.

Für eine andere Ausgestaltung dieser Variante ist eine Steuereinheit in der Bremseinrichtung vorhanden. Die Steuereinheit ist mit Steuerlogik ausgestattet. Die Steuerlogik erzeugt ein elektrisches Steuersignal. Das elektrische Steuersignal steuert dann das Abrissventil in einer Abrisssituation in die zweite Betriebsstellung. Anders gesagt erfolgt eine elektronische Steuerung des Abrissventils in die zweite Betriebsstellung. Eine derartige elektronische Steuerung (worunter auch eine Regelung subsummiert wird) führt auf eine Vielzahl optionaler und alternativer oder kumulativer Vorteile und Ausgestaltungsmöglichkeiten:
- Möglich ist, dass durch die elektronische Steuerung eine individuelle Anpassung des Abrissventils an unterschiedliche Typen von Bremsanlagen und Zugfahrzeugen entbehrlich ist. Um lediglich ein nicht beschränkendes Beispiel zu nennen, kann ein erster Typ eines Zugfahrzeugs mit einem hydraulischen Betriebsdruck von 20 bar betrieben werden, während ein anderes Zugfahrzeugs mit einem hydraulischen Betriebsdruck von 100 bar betrieben wird. Soll dann eine Umschaltung des Abrissventils in die zweite Betriebsstellung mit einer hydraulischen Betätigung in Höhe von bspw. zumindest 50 % des Betriebsdrucks erfolgen, würde dies für den Stand der Technik erfordern, dass eine Kolbenfläche, auf welche der hydraulische Bremsdruck wirkt und welche die Umschaltkraft erzeugt, für das Abrissventil in dem ersten Zugfahrzeug fünf Mal so groß gewählt werden müsste wie bei einem Abrissventil des zweiten Zugfahrzeugs. Diese gebotene individuelle Anpassung der Kolbenfläche des Abrissventils erhöht den Bauaufwand, Montageaufwand, Bevorratungsaufwand, Herstellungsaufwand und die Bauteilvielfalt. Durch die erfindungsgemäße elektronische Steuerung kann ein- und dasselbe Abrissventil unabhängig von dem vorliegenden Typ des Zugfahrzeugs verwendet werden, womit dann aber die Steuerlogik für die unterschiedlichen Typen des Zugfahrzeugs das elektronische Steuersignal zur Umsteuerung des Abrissventils in die zweite Betriebsstellung mit dem Vorliegen von unterschiedlichen Drücken erzeugen kann (für das erläuterte Ausführungsbeispiel im ersten Fall bei einem hydraulischen Bremsdruck, der größer ist als 10 bar, während für den zweiten Typ des Zugfahrzeugs das Steuersignal zur Umschaltung des Abrissventils mit einem hydraulischen Bremsdruck von mehr als 50 bar erzeugt wird).

- Während für die hydraulische Steuerung der Betriebsstellung des Abrissventils als Steuerkriterium für das Herbeiführen der zweiten Betriebsstellung ausschließlich der hydraulische Bremsdruck herangezogen werden kann, ermöglicht die elektronische Steuerung die Berücksichtigung auch alternativer oder kumulativer weiterer Umschaltkriterien, womit auch erweiterte Möglichkeiten für das Erkennen einer Abrisssituation bestehen. Um lediglich einige nicht beschränkende Beispiele zu nennen, kann bspw. bei einer zweikreisigen hydraulischen Bremsanlage des Zugfahrzeugs von der Steuerlogik der Steuereinheit nicht lediglich ein hydraulischer Bremsdruck berücksichtigt werden. Vielmehr kann aus der einzelnen Bewertung beider hydraulischer Bremsdrücke oder auch unter der Berücksichtigung eines von beiden Bremsdrücken abhängigen Kennwerts oder Kennfelds oder einer Wichtung der Bremsdrücke der beiden Kreise ein Abrisskriterium zur Erkennung einer Abrisssituation ausgewertet werden.
- Möglich ist auch, dass ein unter Umständen im Betrieb kurzfristiger Einbruch eines Bremssteuerdrucks und/oder ein temporärer kurzfristiger Anstieg des hydraulischen Bremsdrucks, welchen unter Umständen ein herkömmliches Abrissventil als Abrisssituation werten würde mit der Umschaltung in die zweite Betriebsstellung, mit der elektronischen Steuerung nicht als Abrisssituation behandelt wird. Mittels der Steuerlogik der Steuereinheit können im Rahmen der Erfindung beliebige weitere Betriebsparameter und Kriterien ausgewertet werden, um zuverlässig eine Abrisssituation zu erkennen.

Im Rahmen der Erfindung kann die Steuereinheit ausschließlich der Ansteuerung des Abrissventils dienen. Möglich ist, dass die Steuereinheit mit weiteren Steuereinheiten vernetzt ist, insbesondere durch ein Bussystem und/oder elektrische Leitungen. Möglich ist auch, dass die Steuereinheit multifunktional ist, indem diese zusätzlich zu der Ansteuerung des Abrissventils der Ansteuerung weiterer Komponenten der Bremsanlage, insbesondere des Anhängersteuerventils zwecks Ermöglichung der weiteren Funktionen gemäß den Druckschriften EP 2 165 901 B1 und EP 2 305 524 B1, dient. Möglich ist auch, dass die Steuereinheit als ABS- oder EBS-Steuereinheit ausgebildet ist.

Für einen erfindungsgemäßen Vorschlag wird das Steuersignal über eine Steuerleitung einem elektropneumatischen Vorsteuerventil zugeführt. Das Vorsteuerventil erzeugt einen Vorsteuerdruck für das Abrissventil, der dann das Abrissventil in einer Abrisssituation in die zweite Betriebsstellung steuert. Der Einsatz des Vorsteuerventils ist unter Umständen vorteilhaft, da mit verhältnismäßig kleinen elektrischen Steuersignalen und einem kleinen elektromagnetischen Aktuator der Vorsteuerdruck erzielt werden kann. Andererseits nutzt die elektropneumatische Vorsteuerung die ohnehin in dem Zugfahrzeug vorhandene Druckluft als Energiequelle für die Herbeiführung der zweiten Betriebsstellung des Abrissventils.

Ein weiterer Aspekt der Erfindung widmet sich der Erkennung einer Abrisssituation. Die Erfindung schlägt vor, dass ein Sensor in der Bremseinrichtung vorhanden ist, der (unmittelbar oder mittelbar) den Druck in einer hydraulischen Bremsleitung erfasst. Hierbei kann der Druck in der hydraulischen Bremsleitung selbst oder in einer Zweigleitung der hydraulischen Bremsleitung durch den Sensor erfasst werden. Eine mittelbare Erfassung des Drucks in der hydraulischen Bremsleitung kann erfolgen bspw. durch eine Bremspedalsensor, wobei in diesem Fall je nach Charakteristik des hydraulischen Geber-Zylinders, der von dem Bremspedal betätigt wird, die Stellung des Bremspedals mit einem Druck in der hydraulischen Bremsleitung korreliert. Alternativ oder zusätzlich kann in der erfindungsgemäßen Bremseinrichtung ein Sensor vorhanden sein, welcher (unmittelbar oder mittelbar) den Druck in einer pneumatische Bremssteuerleitung, welche mit dem Kupplungskopf Bremse verbunden ist, erfasst. Hierbei kann der Sensor bspw. den Druck in der pneumatischen Steuerleitung selbst oder einer Zweigleitung oder am Kupplungskopf Bremse erfassen. Möglich ist auch, dass der Sensor die Betriebsstellung des Anhängersteuerventils, insbesondere eines Wiegekolbens desselben, erfasst, welche mit dem Druck in der pneumatische Bremssteuerleitung korreliert. Aus dem Ausgangssignal zumindest eines der vorgenannten Sensoren kann dann auf eine Abrisssituation geschlossen werden .

Im Folgenden werden lediglich einige exemplarische Beispiele für das Erkennen einer Abrisssituation durch die elektronische Steuereinheit genannt:
Für einen Vorschlag der Erfindung ist die Steuereinheit mit Steuerlogik ausgestattet, die auf Grundlage eines Vergleichs des Signals des Sensors, welcher den Druck in der hydraulischen Bremsleitung erfasst, mit dem Signal des Sensors, der den Druck in der pneumatischen Bremssteuerleitung erfasst, eine Abrisssituation erkennt. Alternativ möglich ist, dass die Steuerlogik ein Verhältnis der Signale der Sensoren zur Erkennung der Abrisssituation auswertet.

Dies soll anhand des Folgenden, vereinfachenden, nicht beschränkenden Beispiels erläutert werden: Erzeugt das Anhängersteuerventil einen Bremssteuerdruck, der proportional ist zu dem anliegenden hydraulischen Bremsdruck, führt eine intakte Bremsanlage zu einem konstanten Verhältnis des Signals des Sensors, der den Druck in der hydraulischen Bremsleitung erfasst, zu dem Signal des Sensors, der den Druck in der pneumatischen Bremssteuerleitung erfasst. Hingegen fällt bei unverändertem hydraulischen Bremsdruck in einer Abrisssituation der Druck in der pneumatischen Bremssteuerleitung ab, womit sich das genannte Verhältnis verändert, was durch die Steuerlogik der Steuereinheit erkannt werden kann und womit dann das Steuersignal zur Umsteuerung des Abrissventils in die zweite Betriebsstellung erzeugt werden kann. Möglich ist auch, das ein absoluter Druckabfall des Bremssteuerdrucks durch Auswertung des Signals des Sensors im Fall einer Abrisssituation erfasst wird.

Möglich ist auch, dass die Steuereinheit mit Steuerlogik ausgestattet ist, die für das Erkennen einer Abrisssituation das Ergebnis des Vergleichs oder des Verhältnisses der Signale, mittels welchen der Druck in der hydraulischen Bremsleitung und in der pneumatischen Bremssteuerleitung erfasst wird, mit einem Schwellwert vergleicht.

Alternativ oder zusätzlich möglich ist, dass die Steuerlogik für das Erkennen einer Abrisssituation einen Änderungsverlauf des Signals des Sensors, welcher den Druck in der pneumatischen Bremssteuerleitung erfasst, auswertet. So kann beispielsweise die Änderungsgeschwindigkeit des Signals des Sensors abhängen von der Größe einer Leckage in der Bremssteuerleitung oder des Kupplungskopfs. Andererseits kann durch die Auswertung der Zeitkonstante der Änderung des Signals des Sensors unterschieden werden, ob eine von dem Anhängersteuerventil ausgesteuerte Änderung des pneumatischen Bremssteuerdrucks vorliegt oder eine Änderung, welche eher auf eine Leckage und damit eine Abrisssituation hindeutet. Möglich ist beispielsweise auch, dass die Änderungsgeschwindigkeit oder eine Steigung des Signals des Sensors ausgewertet wird. Ist z. B. die Steigung des Signals des Sensors, der den hydraulischen Bremsdruck erfasst, Null (womit sich also der hydraulische Bremsdruck nicht ändert), während sich der pneumatische Bremssteuerdruck ändert, insbesondere verringert, deutet dies auf eine Leckage und damit eine Abrisssituation hin.

Alternativ oder zusätzlich möglich ist auch, dass für das Erkennen einer Abrisssituation durch die Steuerlogik eine Zeitdauer ausgewertet wird, welche das Verhältnis der Signale der Sensoren für den hydraulischen Bremsdruck und den pneumatischen Bremssteuerdruck einen Schwellwert unter- oder überschreitet. Auf diese Weise kann bspw. vermieden werden, dass für einen kurzzeitigen, betriebsbedingten Anstieg oder Abfall zumindest eines der Signale fälschlicherweise auf eine Abrisssituation geschlossen wird.

Durchaus möglich ist, dass die genannten Bauelemente der Bremseinrichtung jeweils separat ausgebildet sind und diese über elektrische und/oder pneumatische und/oder hydraulische Leitungen miteinander verbunden sind. Für einen weiteren Vorschlag der Erfindung sind das Anhängersteuerventil, das Abrissventil, mindestens ein Sensor, das dem Abrissventil vorgeordnete Ventil und/oder die Steuereinheit in eine Zugfahrzeug-Ventileinheit integriert, wobei diese Integration in ein gemeinsames Gehäuse erfolgen kann oder auch die Integration in eine Zugfahrzeug-Ventileinheit durch Verbindung der Gehäuse einzelner Module, insbesondere Anflanschen der Module, erfolgen kann. Hierbei können beliebige vorgenannte Komponenten und beliebige Anzahlen derselben in die Zugfahrzeug-Ventileinheit integriert sein.

Eine weitere Ausgestaltung der Erfindung widmet sich der Anpassung der Bremseinrichtung an unterschiedliche hydraulische Betriebsdrücke unterschiedlicher Typen hydraulischer Bremsanlagen. Hier schlägt die Erfindung für eine Ausgestaltung vor, dass die Steuereinheit mit Steuerlogik ausgestattet ist, die unter Verwendung unterschiedlicher Abhängigkeiten, Kennlinien oder Kennfelder unterschiedliche Steuersignale für unterschiedliche Typen hydraulischer Bremsanlagen, insbesondere mit unterschiedlichen hydraulischen Betriebsdrücken, erzeugt. Hierbei können die Abhängigkeiten, Kennlinien oder Kennfelder bspw. in einer Speichereinheit der Steuereinheit abgelegt sein und die jeweiligen Kriterien für das Vorliegen einer Abrisssituation in Abhängigkeit des jeweiligen hydraulischen Betriebsdrucks für den jeweiligen Typ einer hydraulischen Bremsanlage beschreiben. Mit der Installation der Bremseinrichtung für einen bestimmten Typ einer hydraulischen Bremsanlage muss dann lediglich eine Auswahl des vorliegenden Typs durch die Steuereinheit, insbesondere durch manuelle Eingabe, erfolgen, womit dann die Steuereinheit die jeweils einschlägige Abhängigkeit, Kennlinie oder das Kennfeld für die Erzeugung des Steuersignals nutzen kann. Damit ist eine einfachere Anpassbarkeit ohne wesentliche konstruktive Änderungen der beteiligten Bauelemente an unterschiedliche Typen hydraulischer Bremsanlagen möglich (wobei durchaus möglich ist, dass je nach Typ der hydraulischen Bremsanlage unterschiedliche Anhängersteuerventile in den Bremseinrichtungen Einsatz finden).

Eine weitere Lösung der der Erfindung zugrundeliegenden Aufgabe ist gegeben durch eine Gruppe von Bremseinrichtungen. Diese Gruppe von Bremseinrichtungen verfügt über eine erste Teilgruppe, die mit Bremseinrichtungen der zuvor spezifizierten Art gebildet ist. Diese Bremseinrichtungen der ersten Teilgruppe sind für einen ersten Typ von Zugfahrzeugen oder Traktoren bestimmt, in welchem ein erster hydraulischer Betriebsdruck wirkt. Des Weiteren verfügt die Gruppe von Bremseinrichtungen über eine zweite Teilgruppe mit Bremseinrichtungen, die ebenfalls wie zuvor spezifiziert ausgebildet sind. Die Bremseinrichtungen der zweiten Teilgruppe sind bestimmt für einen zweiten Typ von Zugfahrzeugen oder Traktoren, in denen ein zweiter hydraulischer Betriebsdruck wirkt. Hierbei weicht der zweite hydraulische Betriebsdruck von dem ersten hydraulischen Betriebsdruck ab. Obwohl grundsätzlich in den beiden Teilgruppen Bremseinrichtungen mit denselben Komponenten oder einer großen Zahl gleicher Komponenten, insbesondere mit gleichen Abrissventilen, Einsatz finden können, kann auf einfache Weise eine Individualisierung der Bremseinrichtungen für die jeweilige Teilgruppe erfolgen: Erfindungsgemäß weisen die Steuereinheiten der Bremseinrichtungen beider Teilgruppen Steuerlogik auf, welche das Steuersignal für die Steuerung des Abrissventils in einer Abrisssituation in die zweite Betriebsstellung in Abhängigkeit des der jeweiligen Teilgruppe zugeordneten hydraulischen Betriebsdrucks ermittelt, wozu auch die zuvor genannten Abhängigkeiten, Kennlinien oder Kennfelder, die für die jeweilige Teilgruppe spezifisch sind, verwendet werden können.

Für eine zweite, ebenfalls von der Erfindung umfasste Variante ist das dem Abrissventil vorgeordnete Ventil nicht ein elektropneumatisches Ventil, sondern ein hydraulisch-pneumatisches Ventil, womit eine u. U. aufwändige elektrische Ansteuerung und der Einsatz eines elektromagnetischen Aktuators entbehrlich sind und die Betriebssicherheit auch bei einem Versagen einer elektrischen Leistungsversorgung gewährleistet ist. Das hydraulisch-pneumatische Ventil kann hierbei auch unmittelbar mit dem hydraulischen Bremsdruck eines zugeordneten hydraulischen Bremskreises des Zugfahrzeugs beaufschlagt sein und ein Ventilelement mit einer hydraulischen Kolbenfläche aufweisen, wobei die Bewegung des Ventilelements den Betriebszustand des dem Abrissventil vorgeordneten Ventils verändert.

Soll dasselbe Abrissventil auch für unterschiedliche Typen von Zugfahrzeugen oder den Zugfahrzeugen zugeordneter hydraulischer Bremsanlagen eingesetzt werden, kann das dem Abrissventil vorgeordnete hydraulisch-pneumatische Ventil auch den unterschiedlichen hydraulischen Bremsdrücken und hydraulischen Charakteristika Rechnung tragen. Möglich ist somit, dass für den Einsatz der Bremseinrichtung für unterschiedliche Typen von Zugfahrzeugen dasselbe Abrissventil, aber unterschiedliche hydraulisch-pneumatische Ventile eingesetzt werden. Für einen Vorschlag der Erfindung weist hingegen das dem Abrissventil vorgeordnete Ventil eine Adapterkolbenfläche auf, an welcher der Druck eines hydraulischen Steueranschlusses anliegt. Dieser Druck erzeugt dann eine Umschaltkraft, mittels welcher das dem Abrissventil vorgeordnete Ventil umschaltbar ist. Diese Umschaltung führt dann zu einer veränderten Beaufschlagung des Steueranschlusses des Abrissventils. Die Betriebsstellung des Abrissventils kann dann aber zusätzlich noch von dem Druck an einem weiteren Steueranschluss des Abrissventils abhängen, welchem der Bremssteuerdruck zugeführt ist. Für den Einsatz der Bremseinrichtung für unterschiedliche Typen von Zugfahrzeugen kann somit dasselbe Abrissventil verwendet werden, während dann unterschiedliche dem Abrissventil vorgeordnete Ventile mit unterschiedlichen Größen der Adapterkolbenflächen verwendet werden können, womit der Gleichanteil der Bremseinrichtungen erhöht werden kann.

Für die konstruktive Ausgestaltung des dem Abrissventil vorgeordneten Ventils gibt es vielfältige Möglichkeiten. Für einen Vorschlag der Erfindung weist dieses Ventil einen Ventilkörper und einen separat von dem Ventilkörper ausgebildeten Adapterkolben auf. Der Adapterkolben ist dabei mechanisch mit dem Ventilkörper gekoppelt, um eine Umschaltkraft zwischen dem Ventilkörper und dem Adapterkolben zu übertragen. Der Adapterkolben bildet hierbei die Adapterkolbenfläche aus. Auf diese Weise kann der Gleichanteil der Bremseinrichtungen noch weiter erhöht werden, da für unterschiedlicher Typen von Bremseinrichtungen sogar derselbe Ventilkörper eingesetzt werden kann und eine Anpassung lediglich über den Einsatz unterschiedlicher Adapterkolben erfolgt.

In weiterer Ausgestaltung dieses Gedankens ist das Gehäuse des dem Abrissventil vorgeordneten Ventils mit einem Ventilkörper-Gehäuse gebildet, in welchem der Ventilkörper geführt ist. Des Weiteren ist ein Adapter-Gehäuse vorhanden, in welchem der Adapterkolben geführt ist. Das Ventilkörper-Gehäuse und das Adapter-Gehäuse sind über eine mechanische Schnittstelle miteinander verbunden, durch welche dann die Umschaltkraft übertragen wird. Hierbei kann sich der Ventilkörper, die mechanische Verbindung des Ventilkörpers mit dem Adapterkolben oder der Adapterkolben durch die genannte Schnittstelle erstrecken. Auf diese Weise kann sogar für Bremseinrichtungen für unterschiedliche Typen von Zugfahrzeugen dasselbe Ventilkörper-Gehäuse verwendet werden, aber der Einsatz unterschiedlicher Adapter-Gehäuse mit zugeordneten unterschiedlichen Adapterkolben erfolgen.

Auch für diese Variante der erfindungsgemäßen Bremseinrichtungen schlägt die Erfindung eine mit großem Gleichanteil herstellbare Gruppe von Bremseinrichtungen für unterschiedliche Typen von Zugfahrzeugen vor. Hierbei weisen Bremseinrichtungen einer ersten Teilgruppe, die für einen ersten Typ von Zugfahrzeugen bzw. einen ersten Typ einer hydraulischen Bremsanlage des Zugfahrzeugs bestimmt sind, den Abrissventilen vorgeordnete Ventile mit einer ersten Adapterkolbenfläche auf. Hingegen weisen Bremseinrichtungen einer zweiten Teilgruppe für Zugfahrzeuge oder hydraulische Bremsanlagen eines zweiten Typs den Abrissventilen vorgeordnete Ventile auf, die eine zweite Adapterkolbenfläche aufweisen. Die erste und zweite Adapterkolbenfläche sind hierbei unterschiedlich groß, so dass über die Wahl der Adapterkolbenfläche eine Anpassung an die unterschiedlichen Einsatzzwecke, also die unterschiedlichen Typen von Zugfahrzeugen oder hydraulischen Bremsanlagen, möglich ist.

Hierbei ist möglich, dass die den Abrissventilen vorgeordneten Ventile der ersten und zweiten Teilgruppe gleiche Ventilkörper-Gehäuse und gleiche Ventilkörper, aber unterschiedliche Adapter-Gehäuse und unterschiedliche in den Adapter-Gehäusen geführte Adapterkolben aufweisen.

Für sämtliche zuvor erläuterten Ausführungsformen der Erfindung können das Abrissventil einerseits und das dem Abrissventil vorgeordnete Ventil andererseits in beliebiger Bauart, insbesondere in Schieberbauart oder in Sitzventil-Bauart, ausgebildet sein, wobei auch möglich ist, dass für das Abrissventil einerseits und das dem Abrissventil vorgeordnete Ventil andererseits unterschiedliche Bauarten eingesetzt werden. Für eine bevorzugte Ausführungsform der Erfindung ist in der Bremseinrichtung das Abrissventil in Schieberbauart ausgebildet, während das dem Abrissventil vorgeordnete Ventil in Sitzventil-Bauart ausgebildet ist.

Des Weiteren möglich ist für die unterschiedlichen erläuterten Bremseinrichtungen, dass ein Ventilelement des Abrissventils und ein Ventilelement des dem Abrissventil vorgeordneten Ventils unterschiedlich große Stellwege aufweisen, wobei die jeweiligen Stellwege an die gewünschte Charakteristik der beiden Ventile angepasst sein kann. So kann beispielsweise für den Stellweg des dem Abrissventil vorgeordneten Ventils ein kleiner Stellweg gewählt werden, welcher Beeinflussungen des zugeordneten hydraulischen Bremskreises minimiert, während das Ventilelement des Abrissventils einen u. U. mindestens um den Faktor 3, 5 oder sogar 10 größeren Stellweg aufweist, um eine zuverlässige Herbeiführung der Drosselstellung, eine ausreichende Drosselwirkung und u. U. auch Zwischenstellungen mit unterschiedlichen Drosselwirkungen über den Stellweg zu ermöglichen.

Für den von dem Ventil, welches dem Abrissventil vorgeordnet ist, ausgesteuerten Druck gibt es unterschiedliche Möglichkeiten. Möglich ist einerseits, dass dieses Ventil in der Öffnungsstellung (unmittelbar oder mittelbar) eine mit einer Druckluftquelle, insbesondere einem Vorratsbehälter, verbundene Vorratsleitung mit dem Steueranschluss des Abrissventils verbindet. Dies hat den Vorteil, dass mit der Umschaltung des dem Abrissventil vorgeordneten Ventils ein definierter Druck dem Steueranschluss des Abrissventils zugeführt wird, welcher auch insbesondere von einer Bremsbetätigung unabhängig ist, womit dann auch ein definierte Betriebszustand des Abrissventils gewährleistet ist. Alternativ möglich ist, dass das dem Abrissventil vorgeordnete Ventil in einer Öffnungsstellung (unmittelbar oder mittelbar) die pneumatische Bremssteuerleitung mit dem Steueranschluss des Abrissventils verbindet.

Für einen Vorschlag der Erfindung ist das Abrissventil in Schieberbauart ausgebildet. Der Ventilkörper bildet somit einen (Ventil-) Schieber aus. Grundsätzlich möglich ist, dass der Drosselquerschnitt in der ersten Betriebsstellung und/oder der zweiten Betriebsstellung des Abrissventils von einem in Umfangsrichtung durchgehenden Ringraum gebildet ist, der radial innenliegend von dem Ventilkörper und radial außenliegend von einem Gehäuse des Abrissventils begrenzt ist. Nachteilig hieran kann unter Umständen sein, dass Fertigungstoleranzen der Innenfläche des Gehäuses und/oder der Außenfläche des Ventilkörpers große Auswirkungen auf den Drosselquerschnitt haben, der aber zur Erfüllung der gesetzlichen Normen und Herbeiführung der angestrebten Wirkungen innerhalb enger Toleranzen vorgegeben werden muss. Für eine erfindungsgemäße Ausgestaltung kommt der Ventilkörper in der zweiten Betriebsstellung in einem Teilumfangsbereich zur Anlage an einem Ventilsitz des Gehäuses, während in einem anderen Teilumfangsbereich der Drosselquerschnitt des Abrissventils gebildet ist. Somit ist der Drosselquerschnitt kein in Umfangsrichtung geschlossener Ringraum, sondern dieser erstreckt sich lediglich über einen Teilumfang. Damit können sich aber etwaige Fertigungstoleranzen nicht über den gesamten Umfangsbereich auswirken, sondern diese beeinflussen den Drosselquerschnitt lediglich in dem Teilumfangsbereich, womit die Anforderungen an die Fertigungstoleranzen reduziert werden können oder mit denselben Toleranzen für die Fertigung des Ventilkörpers und des Gehäuses geringere Schwankungen des Drosselquerschnitts gewährleistet werden können.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert eine Bremsanlage eines Zugfahrzeugs mit einer Bremseinrichtung (vgl. die nicht vorveröffentlichte europäische Patentanmeldung EP 15 177 950.1).
- **Fig. 2**: zeigt einen mittels eines Abrissventils herbeiführbaren Druckverlauf in einer Vorratsleitung bei einem Defekt in einer Bremssteuerleitung (vgl. die nicht vorveröffentlichte europäische Patentanmeldung EP 15 177 950.1).

- **Fig. 3**: zeigt stark schematisiert eine Bremsanlage eines Zugfahrzeugs mit einer Bremseinrichtung.
- **Fig. 4**: zeigt schematisiert ein in einer Bremseinrichtung gemäß Fig. 3 einsetzbares elektropneumatisch vorgesteuertes Abrissventil.
- **Fig. 5**: zeigt schematisiert ein in einer Bremseinrichtung gemäß Fig. 3 einsetzbares elektropneumatisch vorgesteuertes Abrissventil.

- **Fig. 6**: zeigt stark schematisiert eine Bremseinrichtung mit einem hydraulischpneumatischen Ventil, welches mit einem normalen Steueranschluss eines Abrissventils verbunden ist.
- **Fig. 7**: zeigt eine konstruktive Ausgestaltung einer Bremseinrichtung gemäß Fig. 6 in einem Längsschnitt, wobei hier kein hydraulischer Bremsdruck an dem hydraulischen Steueranschluss des Ventils anliegt.
- **Fig. 8**: zeigt die Bremseinrichtung gemäß Fig. 7 in einem Längsschnitt, wobei hier ein hydraulischer Bremsdruck an dem hydraulischen Steueranschluss des Ventils anliegt.
- **Fig. 9**: zeigt die Bremseinrichtung gemäß Fig. 7 und in einem Längsschnitt, wobei hier ein hydraulischer Bremsdruck an dem hydraulischen Steueranschluss des Ventils anliegt und ein Defekt in der pneumatischen Bremssteuerleitung vorliegt.
- **Fig. 10 und 11**: zeigen stark schematisiert Bremsanlagen eines Zugfahrzeugs mit einer Bremseinrichtung.

### FIGURENBESCHREIBUNG

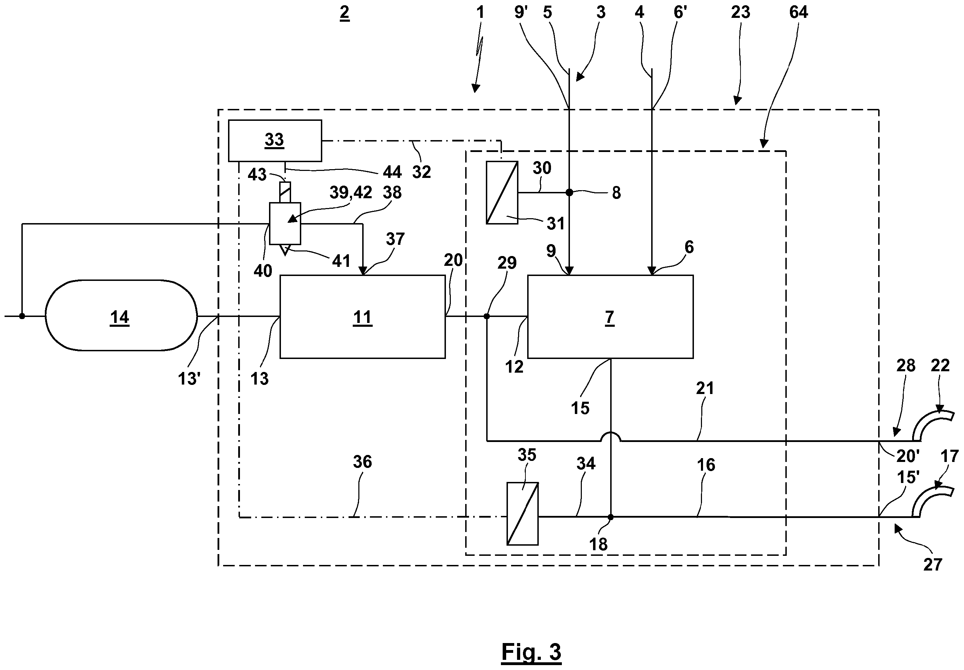

Die Bremsanlage mit der Bremseinrichtung 1 gemäß **Fig. 3** entspricht grundsätzlich hinsichtlich der Verbindungen zwischen dem Vorratsbehälter 14, den Vorratsanschlüssen 13, 13', dem Abrissventil 11, dem Ausgangsanschluss 20, der Verzweigung 29, dem Anschluss 20, dem Anhängersteuerventil 7, den hydraulischen Steueranschlüssen 6, 9, dem Ausgangsanschluss 15, der Vorratsleitung 21 und der Bremssteuerleitung 16 sowie der Ausgangsanschlüsse 15', 20' und der Kupplungsköpfe 17, 22 den Verbindungen gemäß **Fig. 1**, wobei das Anhängersteuerventil 7 in der Bremseinrichtung 1 auch (konstruktiv und mit denselben Anschlüssen) entsprechend dem Anhängersteuerventil 7 gemäß dem Stand der Technik in Fig. 1 ausgebildet sein kann.

Allerdings ist die hydraulische Bremsleitung 5 nicht über die Verzweigung 8 mit dem hydraulischen Steueranschluss 10 des Abrissventils 11 verbunden. Vielmehr ist hier die hydraulische Bremsleitung 5 über die Verzweigung 8 und eine Zweigleitung 30 mit einem Sensor 31, hier einem Drucksensor, verbunden. Das Messsignal des Sensors 31 wird über eine elektrische Leitung 32 einer elektronischen Steuereinheit 33 zugeführt. Entsprechend ist abweichend zu Fig. 1 gemäß Fig. 3 die Verzweigung 18 nicht mit dem pneumatischen Steueranschluss 19 des Abrissventils 11 verbunden. Vielmehr ist die Verzweigung 18 über eine Zweigleitung 34 mit einem Sensor 35, hier einem Drucksensor, verbunden. Das Messsignal des Sensors 35 wird über eine Leitung 36 der elektronischen Steuereinheit 33 zugeführt.

Das Abrissventil 11 verfügt (neben dem Vorratsanschluss 13 und dem Ausgangsanschluss 20) ausschließlich über einen pneumatischen Steueranschluss 37, der über eine Steuerleitung 38 mit einem dem Abrissventil vorgeordneten Ventil 39 verbunden ist, welches ein Steuerventil für das Abrissventil 11 bildet. Das Ventil 39 verfügt über einen Vorratsanschluss 40, welcher aus dem Vorratsbehälter 14 mit Druckluft versorgt wird. Des Weiteren verfügt das Ventil 39 über eine Entlüftung 41. Im einfachsten Fall ist das Ventil 39 als 3/2-Wegeventil ausgebildet mit einer Belüftungsstellung, in welcher über das Ventil 39 in einer Durchlassstellung desselben der Steueranschluss 37 des Abrissventils 11 mit Druckluft aus dem Vorratsbehälter 14 beaufschlagt wird, sowie mit einer Entlüftungsstellung, in welcher der Steueranschluss 37 des Abrissventils 11 über das Ventil 39 mit der Entlüftung 41 verbunden wird. Das Ventil 39 bildet somit ein elektropneumatisches Vorsteuerventil 42 für das Abrissventil 11.

Das Ventil 39 verfügt über einen elektrischen Steueranschluss 43, der über eine Steuerleitung 44 mit der elektronischen Steuereinheit 33 verbunden ist. In einer Abrisssituation, welche von der Steuereinheit 33 auf Grundlage der Signale der Sensoren 31, 35 ermittelt wird, erzeugt die Steuereinheit 33 ein Steuersignal, welches über die Steuerleitung 44 das Ventil 39 so ansteuert, dass infolge der elektropneumatischen Vorsteuerung durch das Ventil 39 das Abrissventil 11 in die zweite Betriebsstellung überführt wird, in welcher die größere Drosselwirkung wirksam wird und somit entsprechend **Fig. 2** ein Druckabfall an dem Kupplungskopf Vorrat 22 herbeigeführt wird, der letztendlich zu einer Auslösung der Notbremsfunktion des Anhängers führt.

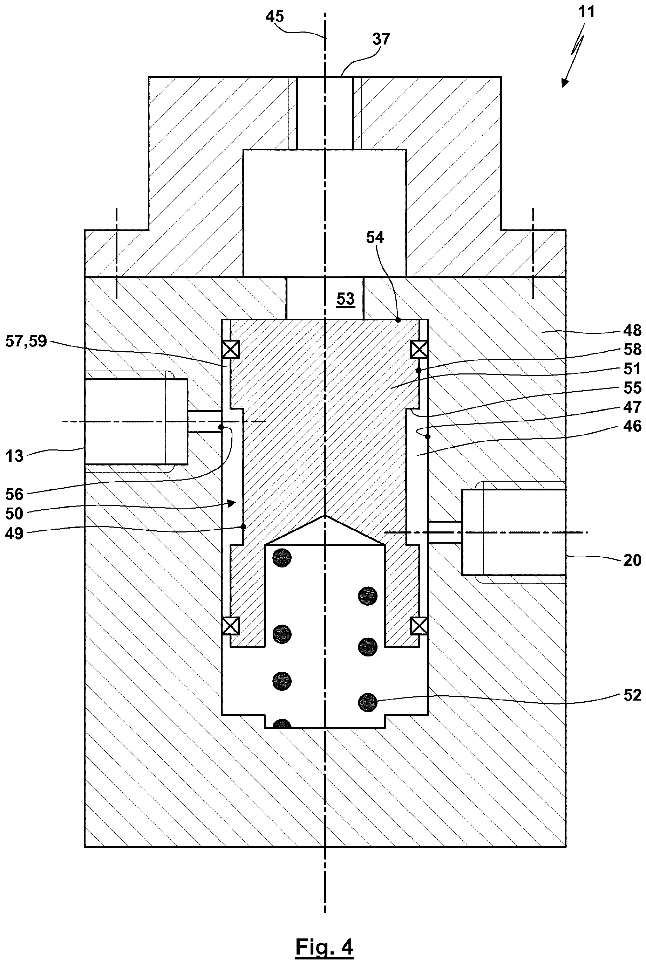

**Fig. 4** zeigt schematisch ein Abrissventil 11, welches als Schieberventil ausgebildet ist. In der in Fig. 4 wirksamen ersten Betriebsstellung des Abrissventils 11 münden die in Richtung einer Längsachse 45 versetzt angeordneten Anschlüsse 13, 20 in einen Ringraum 46, welcher radial außenliegend von einer Innenbohrung 47 eines Gehäuses 48 begrenzt ist sowie radial innenliegend von einem Nutgrund 49 einer in Umfangsrichtung um die Längsachse 45 umlaufenden Nut 50 eines Ventilkörpers 51 begrenzt ist. Der Ringraum 46 gewährleistet eine Verbindung der Anschlüsse 13, 20 mit kleiner oder keiner Drosselwirkung angesichts des verhältnismäßig großen Querschnitts des Ringraums 46. Der Ventilkörper wird durch eine Feder 52 in Richtung der in Fig. 4 wirksamen ersten Betriebsstellung beaufschlagt.

Entgegen der Beaufschlagung durch die Feder 52 kann durch Beaufschlagung des Steueranschlusses 37 mit dem Druck des Vorratsbehälters 14 über das Ventil 39 in seiner Durchlassstellung der Ventilkörper 51 in Richtung der Längsachse 45 in seine zweite Betriebsstellung (in Fig. 4 nach unten) bewegt werden. Hierzu mündet der Anschluss 37 in einen Steuerraum 53. Der Steuerraum ist begrenzt von einer Steuerfläche 54 des Ventilkörpers 51, die von der Stirnseite des Ventilkörpers 51 ausgebildet ist, die auf der der Feder 52 abgewandten Seite angeordnet ist. Hierbei ist die Größe der Steuerfläche 54 derart bemessen, dass mit dem Druck des Vorratsbehälters 14 an der Steuerfläche 54 eine Kraft erzeugt wird, die ausreichend ist, um den Ventilkörper 51 entgegen der Beaufschlagung durch die Feder 52 in die zweite Betriebsstellung zu bewegen.

Mit der Überführung des Ventilkörpers 51 von der ersten Betriebsstellung in die zweite Betriebsstellung überfährt eine den Ringraum 46 axial begrenzende, auf der dem Steuerraum 53 zugewandten Seite des Ringraums 46 angeordnete Steuerkante 55 eine Mündung 56 des Vorratsanschlusses 13 in die Innenbohrung 47. Dies hat zur Folge, dass die Druckluft nicht ausschließlich über den Ringraum 46 mit verhältnismäßig großem Querschnitt von dem Vorratsanschluss 13 zu dem Ausgangsanschluss 20 gelangt. Vielmehr muss die Druckluft auf diesem Weg einen Ringraum 57 passieren, der radial außenliegend von der Innenbohrung 47 begrenzt ist und radial innenliegend begrenzt ist von einer Mantelfläche 58 des Ventilkörpers 51, deren Durchmesser größer ist als der Durchmesser des Nutgrunds 49. Der Ringraum 57 verfügt somit über einen kleineren Querschnitt als der Ringraum 46, womit in der zweiten Betriebsstellung ein kleinerer Drosselquerschnitt 59 mit größerer Drosselwirkung von der Druckluft auf dem Weg zwischen den Anschlüssen 13, 20 passiert werden muss.

Ohne Erkennen einer Abrisssituation durch die Steuereinheit 33 befindet sich das Ventil 39 in seiner Entlüftungsstellung, womit das Abrissventil 11 die in Fig. 4 dargestellte erste Betriebsstellung einnimmt. Erkennt hingegen die Steuereinheit 33 das Vorliegen einer Abrisssituation, steuert diese mit einem Steuersignal das Ventil 39 um in die Belüftungsstellung, so dass die Druckluft aus dem Vorratsbehälter 14 über das Ventil 39 und den Steueranschluss 37 zu dem Steuerraum 53 gelangt und infolge der auf die Steuerfläche 54 des Ventilkörpers 51 ausgeübten Kraft entgegen der Beaufschlagung durch die Feder 52 die zweite Betriebsstellung herbeigeführt wird. Für das Ausführungsbeispiel gemäß Fig. 4 werden somit die unterschiedlichen Drosselquerschnitte in der ersten und zweiten Betriebsstellung des Abrissventils 11 durch zwischen den Anschlüssen 13, 20 zur Wirkung kommende Ringräume 46, 57 mit unterschiedlichen Drosselquerschnitten bereitgestellt.

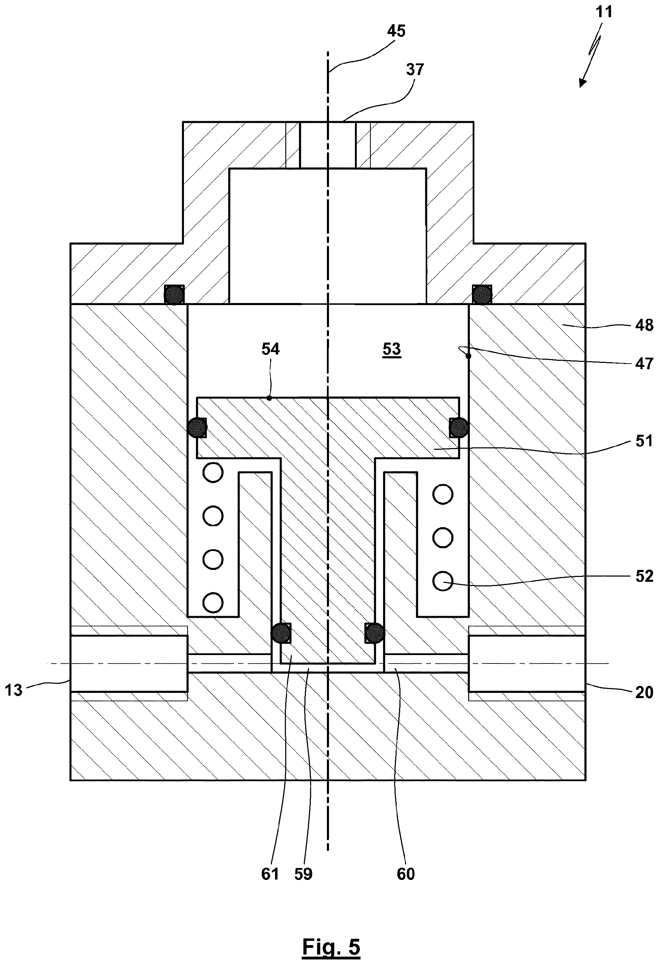

Auch für das Ausführungsbeispiel gemäß **Fig. 5** bildet ein in Richtung der Längsachse 45 in einer Innenbohrung 47 eines Gehäuses 48 verschieblicher, auf einer vorgespannten Druckfeder 52 abgestützter Ventilkörper 51 eine Steuerfläche 54 aus, mit der ein Steuerraum 53 begrenzt ist, der über den Steueranschluss 37 mit dem Ventil 39 verbunden ist. Hier ist mit dem Ventilkörper 51 allerdings kein Schieberventil gebildet. Vielmehr sind hier die Anschlüsse 13, 20, die in derselben Höhe bzgl. der Längsachse 45 auf unterschiedlichen Seiten angeordnet sind, über einen Verbindungskanal oder eine Verbindungsbohrung 60 miteinander verbunden. In der (in Fig. 5 nicht wirksamen) ersten Betriebsstellung ohne Druckbeaufschlagung des Steuerraums 53 gibt der Ventilkörper 51 die Verbindungsbohrung 60 vollständig frei, so dass ein maximaler Drosselquerschnitt zur Verfügung steht.

Hingegen kann mit Druckbeaufschlagung des Steuerraums 53 die in Fig. 5 wirksame zweite Betriebsstellung herbeigeführt werden. In der zweiten Betriebsstellung ist ein von einem Endbereich des Ventilkörpers 51 ausgebildeter Drosselkörper 61 in der Verbindungsbohrung 60 angeordnet, womit hier ein reduzierter Drosselquerschnitt 59 wirksam wird.

Gemäß Fig. 3 können die Steuereinheit 33, das Ventil 39, das Abrissventil 11, der Drucksensor 31, der Drucksensor 35 und das Anhängersteuerventil 7 mit zugeordneten elektrischen und pneumatischen sowie hydraulischen Leitungen und Anschlüssen in eine Zugfahrzeug-Ventileinheit 23 (vgl. gestrichelte Umrandung) integriert sein. Möglich ist hierbei auch, dass ein Zugfahrzeug-Ventilmodul 64 mit den Sensoren 31, 35 und dem Anhängersteuerventil 7 gebildet ist (vgl. die gestrichelte Umrandung), wobei das Zugfahrzeug-Ventilmodul 64 über Anschlüsse für die beiden hydraulischen Bremsleitungen 4, 5, Anschlüsse für die Kupplungsköpfe 17, 22 und einen Anschluss, der mit dem Ausgangsanschluss 20 des Abrissventils 11 verbunden ist, verfügen kann. Darüber hinaus verfügt dann das Zugfahrzeug-Ventilmodul 64 über elektrische Anschlüsse für die Leitungen 32, 36.

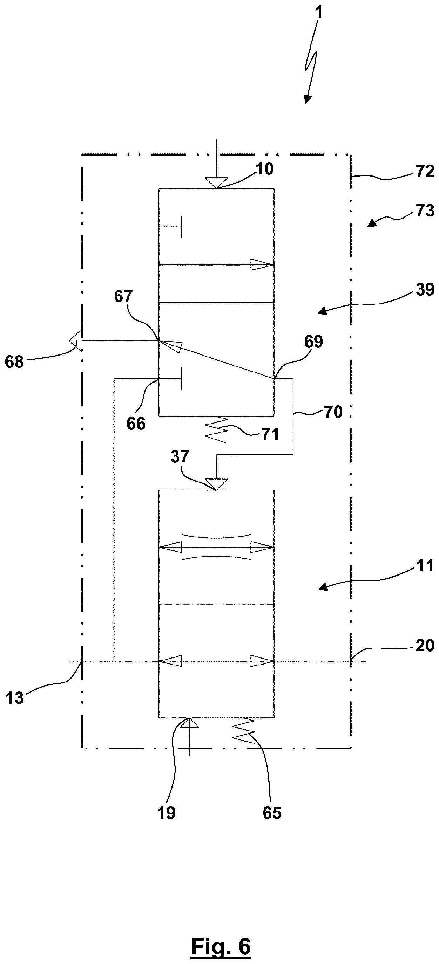

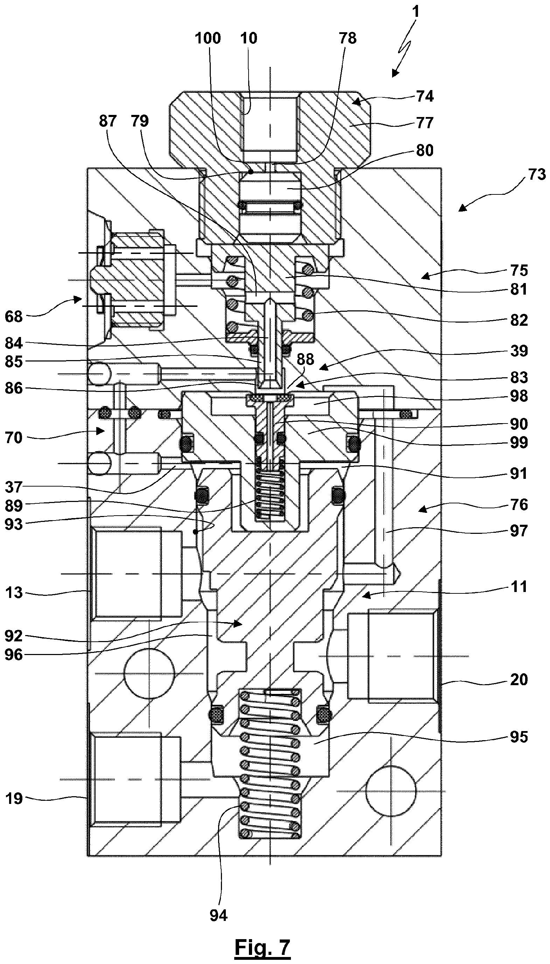

Fig. 3 bis 5 zeigen Ausführungsformen einer ersten Variante der erfindungsgemäßen Bremseinrichtung 1, bei welcher das Abrissventil 11 über ein elektropneumatisches Ventil 39 pneumatisch vorgesteuert ist. Für eine zweite Variante der erfindungsgemäßen Bremseinrichtung 1, die schematisch in Fig. 6 und in einer konstruktiven Ausgestaltung in Fig. 7 bis 9 dargestellt ist, erfolgt eine hydraulisch-pneumatische Vorsteuerung des Abrissventils 11:

Gemäß **Fig. 6** verfügt die Bremseinrichtung 1 über ein Abrissventil 11 und ein Ventil 39. Das Abrissventil 11 ist ein 2/2-Wegeventil, welches als erste Betriebsstellung eines Durchlassstellung aufweist und in einer zweiten, in Fig. 6 nicht wirksamen Betriebsstellung eine Drosselung vornimmt. Das Abrissventil 11 verbindet einen Vorratsanschluss 13 mit einem Ausgangsanschluss 20, wobei der Vorratsanschluss 13 entsprechend Fig. 1 mit einem Vorratsbehälter 14 verbunden ist, während der Ausgangsanschluss 20 entsprechend Fig. 1 über eine Verzweigung 29 sowohl mit einem Anhängersteuerventil 7 als auch mit einer Vorratsleitung 21 und über diese mit einem Kupplungskopf Vorrat 22 verbunden ist. Das Abrissventil 11 verfügt über einen pneumatischen Steueranschluss 37, dessen pneumatische Beaufschlagung in Richtung der zweiten Betriebsstellung wirkt, sowie einen weiteren pneumatischen Steueranschluss 19, der in Richtung der ersten Betriebsstellung wirkt. Das Abrissventil 11 weist eine Feder 65 auf, die ebenfalls in Richtung der ersten Betriebsstellung wirkt.

Das Ventil 39 ist als 3/2-Wegenventil ausgebildet. Es verfügt über einen Eingangsanschluss 66, der mit dem Vorratsanschluss 13 verbunden ist. Des Weiteren verfügt das Ventil 39 über einen Entlüftungsanschluss 67, der mit einer Entlüftung 68 verbunden ist. Weiterhin weist das Ventil 39 einen Ausgangsanschluss 69 auf. In der in Fig. 6 wirksamen ersten Betriebsstellung verbindet das Ventil 39 den Ausgangsanschluss 69 mit dem Entlüftungsanschluss 67, während das Ventil 39 in einer zweiten Betriebsstellung den Eingangsanschluss 66 mit dem Ausgangsanschluss 69 verbindet. Der Ausgangsanschluss 69 ist über eine Steuerleitung 70 mit dem Steueranschluss 37 des Abrissventils 11 verbunden. Das Ventil 39 verfügt über einen hydraulischen Steueranschluss 10, der mit der hydraulischen Bremsleistung 5 verbunden oder verbindbar ist. Die hydraulische Beaufschlagung des Steueranschlusses 10 beaufschlagt das Ventil 39 in Richtung der zweiten Betriebsstellung. Eine Feder 71 beaufschlagt das Ventil 39 in Richtung der ersten Betriebsstellung. Die Funktion der Bremseinrichtung 1 gemäß Fig. 6 ist wie folgt:
a) Ohne Betätigung der hydraulischen Bremsanlage 3 des Zugfahrzeugs, also ohne hydraulische Beaufschlagung des Steueranschlusses 10, befindet sich das Ventil 39 infolge der Feder 71 in der in Fig. 6 wirksamen ersten Betriebsstellung. Dies hat zur Folge, dass der Steueranschluss 37 des Abrissventils 11 über das Ventil 39 und die Entlüftung 68 entlüftet ist. Somit befindet sich das Abrissventil 11 infolge der Beaufschlagung durch die Feder 65 in der ersten Betriebsstellung. Druckluft kann somit ohne erhöhte Drosselung aus dem Vorratsbehälter 14 zum Anhängersteuerventil 7 und auch über den Kupplungskopf 22 zu der Druckluftanlage des Anhängers gelangen, womit auch eine schnelle Nachfüllung der Druckluftanlage des Anhängers ohne unnötige Drosselung in dem Abrissventil 11 möglich ist.
b) Erfolgt eine Betätigung der hydraulischen Bremsanlage 3, führt eine Beaufschlagung des Steueranschlusses 10 in einem Ausmaß, welches ausreichend ist, um die Kraft der Feder 71 zu überwinden, zu einer Umschaltung des Ventils 39 aus der ersten Betriebsstellung in die zweite Betriebsstellung. Dies hat zur Folge, dass der Steueranschluss 37 des Abrissventils 11 von dem Vorratsanschluss 13 über das Ventil 39 pneumatisch beaufschlagt wird. Solange der hydraulische Druck an dem Steueranschluss 10 ausreichend ist, um das Ventil 39 in die zweite Betriebsstellung umzuschalten und in dieser zu halten, ist die Beaufschlagung des Steueranschlusses 37 unabhängig von der Höhe des wirkenden hydraulischen Drucks an dem Steueranschluss 10. Die pneumatische Beaufschlagung des Steueranschlusses 37 hat nicht zwingend eine Umschaltung des Abrissventils 11 in die zweite, gedrosselte Betriebsstellung zur Folge. Vielmehr hängt diese Umschaltung noch davon ab, welcher Druck an dem Steueranschluss 19 anliegt:
   - Führt die hydraulische Beaufschlagung der hydraulischen Bremsanlage 3 dazu, dass das Anhängersteuerventil 7 in der Bremssteuerleitung 16 und damit über die Verzweigung 18 auch an dem Steueranschluss 19 einen Bremssteuerdruck erzeugt, überwiegt die durch die Feder 65 und den Druck an dem Steueranschluss 19 auf das Abrissventil 11 ausgeübte Kraft gegenüber der infolge der pneumatischen Beaufschlagung des Steueranschlusses 37 erzeugten entgegengerichteten Kraft, so dass das Abrissventil 11 in der ersten Betriebsstellung verbleibt. Der Schwellwert des Hydraulikdruckes an dem Steueranschluss 10 des Ventils 39 für dessen Umschaltung kann hierbei so hoch gewählt werden, dass für einen entsprechenden Druck an dem Steueranschluss 9 des Anhängersteuerventils 7 ein Bremssteuerdruck in der Bremssteuerleitung 16 erzeugt wird, welcher bei Wirkung an dem Steueranschluss 19 ausreichend ist, um entgegen der pneumatischen Beaufschlagung des Steueranschlusses 37 das Abrissventil 11 in der ersten Betriebsstellung zu halten.
   - Kommt es allerdings zu einer Leckage in der Bremssteuerleitung 16, des Kupplungskopfes 17 oder in der pneumatischen Anhängerbremsanlage, bricht auch der Druck an dem Steueranschluss 19 des Abrissventils ein. Dies hat wiederum zu Folge, dass die mit der pneumatischen Beaufschlagung des Steueranschlusses 37 bewirkte Kraft in dem Abrissventil 11 in Richtung der zweiten Betriebsstellung überwiegt gegenüber der Kraft der Feder 65 und der reduzierten Kraft infolge der leckagebedingt reduzierten pneumatischen Beaufschlagung des Steueranschlusses 19, so dass die Umschaltung des Abrissventils 11 in die zweite Betriebsstellung erfolgt.

In Fig. 6 ist mit der strichpunktierten Linie gekennzeichnet, dass das Abrissventil 11 und das Ventil 39 in einem gemeinsamen Gehäuse 72 angeordnet sein können, so dass diese eine Ventileinheit 73 bilden. Ohne dass dies zwingend der Fall ist, kann eine derartige Ventileinheit 73 ausschließlich über den Steueranschluss 10, die Entlüftung 68 oder einen Entlüftungsanschluss, den Vorratsanschluss 13, den Steueranschluss 19 und den Ausgangsanschluss 20 mit den benachbarten Bauelementen kommunizieren, wobei in diesem Fall die Anschlüsse 66, 67, 69, 37 in die Ventileinheit 73 integriert sein können.

**Fig. 7** zeigt eine konstruktive Ausgestaltung einer derartigen Variante der Bremseinrichtung 1. Gemäß Fig. 7 weist das Gehäuse 72 ein Adapter-Gehäuse 74, ein Ventilkörpergehäuse 75 und ein Abrissventilgehäuse 76 auf. Hierbei ist das Adapter-Gehäuse 74 als in eine Gewindebohrung des Ventilkörpergehäuses 75 einschraubbarer Anschlussstutzen 77 ausgebildet, dessen Steueranschluss 10 (hier vorzugsweise über eine Drosselbohrung 78) in eine Adapterkolbenkammer 79 mündet, in welcher unter radialer Abdichtung ein Adapterkolben 80 verschieblich ist.

Der Adapterkolben 80 liegt mit der dem Steueranschluss 10 abgewandten Stirnseite lose an einem Ventilkörper 81 des Ventils 39 an. Der Ventilkörper 81 ist in grober Näherung T-förmig ausgebildet, wobei an dem Querschenkel des T auf der Oberseite der Adapterkolben 80 anliegt. An der Unterseite des Querschenkels des T des Ventilkörpers 81 stützt sich ein Fußpunkt einer Feder 82 ab, deren anderer Fußpunkt an einem Boden einer Ausnehmung des Ventilkörpergehäuses 75 zur verschieblichen Aufnahme des Ventilkörpers 81 abgestützt ist. Im Bereich des Bodens ist eine Bohrung des Ventilkörpergehäuses 75 vorhanden, welche zu einem Sitzventil 83 führt. Durch die Bohrung erstreckt sich ein ein Sackloch 84 aufweisender Fortsatz 85 des Ventilkörpers 81, der dessen untere Stirnseite ausbildet. Das Sackloch 84 ist über eine Querbohrung 87, die Ausnehmung des Ventilkörpergehäuses 75 zur Aufnahme des Ventilkörpers 81 und weitere Bohrungen des Ventilkörpergehäuses 75 mit der Entlüftung 68 verbunden.

Bei dem Sitzventil 83 ist ein Gehäusesitz 88 des Ventilkörpergehäuses 75 über einen mittels einer vorgespannten Feder 89 beaufschlagten Verschlusskörper 90 verschließbar. Befindet sich für nicht hinreichende hydraulische Beaufschlagung des Steueranschlusses 10 und die hierdurch bedingte obere Betriebsstellung des Adapterkolbens 80 sowie des Ventilkörpers 81 der Ventilkörpersitz 86 beabstandet von dem Verschlusskörper 90, ist zwischen dem Ventilkörpersitz 86 und dem Verschlusskörper 90 ein Übertrittsquerschnitt gebildet, über welchen die Steuerleitung 70 mit dem Sackloch 84 des Ventilkörpers 81 und damit auch mit der Entlüftung 68 verbunden ist.

Für das dargestellte Ausführungsbeispiel weist die Steuerleitung 70 ineinander mündende Bohrungen sowohl des Ventilkörpergehäuses 75 als auch des Abrissventilgehäuses 76 auf, welche über eine pneumatisch abgedichtete Schnittstelle zwischen dem Ventilkörpergehäuse 75 und dem Abrissventilgehäuse 76 miteinander verbunden sind. Eine Entlüftung der Steuerleitung 70 erfolgt hierbei über einen Ringraum, welcher zwischen der äußeren Mantelfläche des Fortsatzes 85 und der Innenfläche der Bohrung des Ventilkörpergehäuses 75 gebildet ist, und den genannten Übertrittsquerschnitt zu dem Sackloch 84.

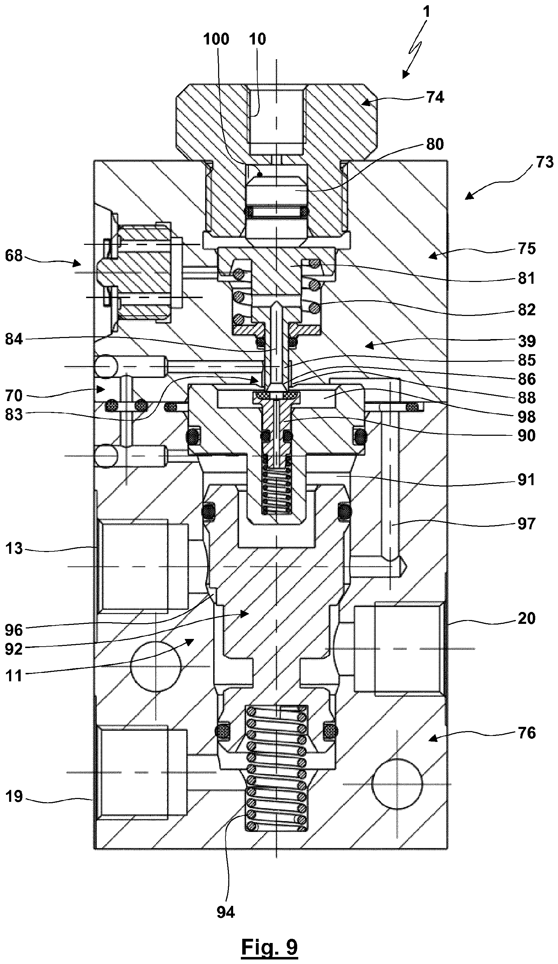

Die Steuerleitung 70 mündet mit einem hier integrierten Steueranschluss 37 in einen Steuerraum 91, in welchem eine obere Kolben- oder Steuerfläche eines Ventilkörpers 92 des Abrissventils 11 mit dem Druck in der Steuerleitung 70 beaufschlagt wird. Der Ventilkörper 92 ist unter Abdichtung des Steuerraums 91 verschieblich in einer Sackloch-Ausnehmung 93 des Abrissventilgehäuses 73 geführt. Hierbei ist der Ventilkörper 92 über eine vorgespannte Feder 94 beaufschlagt. Ein Federfußpunkt der Feder 94 ist einem Boden der Sackloch-Ausnehmung 93 abgestützt, während der andere Federfußpunkt der Feder 94 an der dem Steuerraum 91 abgewandten Stirnseite des Ventilkörpers 92 abgestützt ist. Die dem Steuerraum 91 abgewandte Stirnseite des Ventilkörpers 92 bildet eine untere Kolben- oder Steuerfläche des Ventilkörpers 92, die einen Steuerraum 95 begrenzt, in welchen der Steueranschluss 19 mündet. Des Weiteren münden in einen abgestuften Ringraum 96 zwischen der Mantelfläche des Ventilkörpers 92 und der Innenfläche der Sackloch-Ausnehmung 93 unter Abdichtung gegenüber den Steuerräumen 91, 95 bei unterschiedlichen Längserstreckungen des Ventilkörpers 92 der Vorratsanschluss 13 sowie die Ausgangsanschluss 20. Über den Ringraum 96 kann Druckluft von dem Vorratsanschluss 13 zu dem Ausgangsanschluss 20 übertreten. Die Mantelfläche des Ventilkörpers 92 und die Innenfläche der Sackloch-Ausnehmung 93 sind hierbei so gestaltet, dass in der in Fig. 7 wirksamen Stellung des Ventilkörpers 92 keine oder nur eine geringe Drosselung erfolgt, während in der in Fig. 9 dargestellten zweiten Betriebsstellung des Ventilkörpers 92 über den Ringraum 96 eine größere Drosselung erfolgt. Dies kann beispielsweise mit der Ausstattung der genannten Mantelfläche und/oder Innenfläche mit geeigneten Steuerkanten, Absätzen und Nuten in für den Fachmann an sich bekannter Weise erfolgen.

Der Ringraum 96 ist über einen Verbindungskanal 97 mit einer Einlasskammer 98 verbunden. Hierbei ist die Einlasskammer 98 im Bereich der Schnittstelle zwischen dem Abrissventilgehäuse 76 und dem Ventilkörpergehäuse 75 sowie einem zwischen dem Abrissventilgehäuse 76 und dem Ventilkörpergehäuse 75 gefangenen Einsatzkörper 99 gebildet.

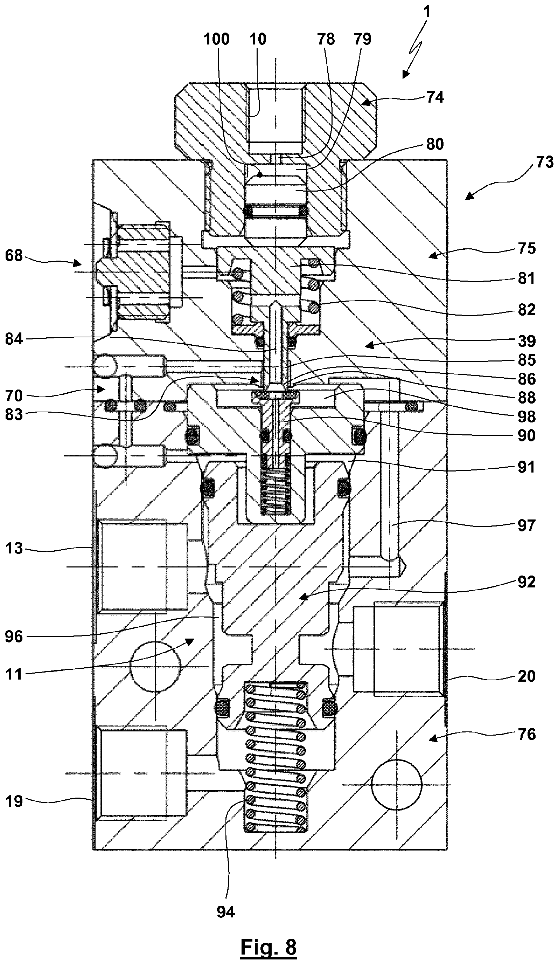

Die Funktionsweise der Bremseinrichtung 1 wird im Folgenden anhand der unterschiedlichen Betriebsstellungen in den Fig. 7 bis 9 erläutert:
a) Fig. 7 stellt die Bremseinrichtung 1 dar für einen Betriebszustand, für welchen die hydraulische Bremsanlage 3 einen hydraulischen Druck aufweist, welcher geringer ist als ein Schwellwert, insbesondere ein Schwellwert, der mit einer Vollbremsung korreliert. Der unterhalb des Schwellwerts liegende hydraulische Druck an dem Anschluss 10 hat zur Folge, dass die Beaufschlagung der Adapterkolbenfläche 100 des Adapterkolbens 80 keine ausreichende Kraft an dem Adapterkolben 80 erzeugt, um den Ventilkörper 81 entgegen der Beaufschlagung der Feder 82 aus der ersten Betriebsstellung gemäß Fig. 7 zu bewegen. Dies hat zur Folge, dass der Übertrittsquerschnitt des Sitzventils 83 geöffnet ist und der Steuerraum 91 des Abrissventils 11 über die Steuerleitung 70, das Sitzventil 83, das Sackloch 84, die Querbohrung 87 und die Entlüftung 68 entlüftet ist. Somit wirkt an dem Ventilkörper 92 des Abrissventils 11 keine Kraft in Richtung der zweiten Betriebsstellung, während gemäß Fig. 7 der Ventilkörper 92 infolge der Feder 94 in Richtung der ersten Betriebsstellung beaufschlagt ist und in dieser gehalten ist. Ergänzend wirkt an der unteren Steuerfläche des Ventilkörpers 92 der von dem Anhängersteuerventil 7 ausgesteuerte Bremssteuerdruck, welcher über den Steueranschluss 19 in den Steuerraum 95 gelangt. Vor der Überschreitung eines Schwellwerts des hydraulischen Drucks an dem Steueranschluss 10 behält somit das Ventil 39 die erste Betriebsstellung, nämlich die Entlüftungsstellung bei, und das Abrissventil 11 behält die erste Betriebsstellung bei, in welcher der Vorratsanschluss 13 über einen Ringraum 96 mit verhältnismäßig kleiner Drosselwirkung mit dem Ausgangsanschluss 20 verbunden ist.
b) Überschreitet hingegen der Druck an dem Steueranschluss 10 den Schwellwert, ist die an der Adapterkolbenfläche 100 von dem hydraulischen Druck hervorgerufene Kraft ausreichend, um den Ventilkörper 81 entgegen der Beaufschlagung durch die Feder 82 in die zweite Betriebsstellung gemäß **Fig. 8** zu bewegen. Mit der Bewegung des Fortsatzes 85 kommt der Ventilkörpersitz 86 zur Anlage an dem Verschlusskörper 90, womit zunächst die Verbindung zwischen der Steuerleitung 70 und dem Sackloch 84 und damit der Entlüftung 68 geschlossen wird. Die weitere Bewegung des Ventilkörpers 81 hat dann zur Folge, dass sich gemeinsam mit dem Ventilkörper 81 der Verschlusskörper 90 von dem Gehäusesitz 88 weg bewegt, womit ein Einlass-Öffnungsquerschnitt geschaffen wird. Der Einlass-Öffnungsquerschnitt verbindet hierbei die Einlasskammer 98 mit der Steuerleitung 70. Somit kann Druckluft von dem Vorratsanschluss 13 über den Ringraum 96, den Verbindungskanal 97, die Einlasskammer 98, den Einlass-Öffnungsquerschnitt und die Steuerleitung 70 den Steuerraum 91 belüften, so dass an der stirnseitigen oberen Steuerfläche des Ventilkörpers 92, mit der der Steuerraum 91 begrenzt ist, eine pneumatische Kraft erzeugt wird, welche den Ventilkörper 92 in Richtung der zweiten Betriebsstellung beaufschlagt. Für intakten Bremssteuerkreis für den Anhänger ist der Ventilkörper 92 allerdings in entgegengesetzter Richtung sowohl durch die Feder 94 beaufschlagt als auch durch die Beaufschlagung der den Steuerraum 95 begrenzenden unteren Steuerfläche des Ventilkörpers 92 mit dem Bremssteuerdruck beaufschlagt. Die hieraus resultierende Gegenkraft hält für intakten Bremssteuerkreis für den Anhänger den Ventilkörper 92 in der ersten Betriebsstellung (vgl. Fig. 8). Somit befindet sich gemäß Fig. 8 das Ventil 39 in der zweiten Betriebsstellung mit einer Einlassstellung des Sitzventils 83, während sich das Abrissventil 11 weiterhin in der ersten Betriebsstellung befindet mit ungedrosseltem oder nur geringfügig gedrosseltem Übertritt von Druckluft von dem Vorratsanschluss 13 zu dem Ausgangsanschluss 20.
c) Für den Fall eines Defektes im Bremssteuerkreis des Anhängers, insbesondere eines Abrisses des Kupplungskopfs Bremse und/oder einer Leckage in einer Bremssteuerleitung, fällt bei ansonsten unveränderten Druckverhältnissen und Stellungen entsprechend Fig. 8 der Druck an dem Steueranschluss 19 ab, was zur Folge hat, dass auf den Ventilkörper 92 entgegen der Beaufschlagung der oberen Steuerfläche im Bereich des Steuerraums 91 eine kleinere pneumatische Beaufschlagung der unteren Steuerfläche erfolgt. Die in dem Steuerraum 91 erzeugte Kraft überwiegt somit, so dass der Ventilkörper 92 sich in die zweite Betriebsstellung gemäß **Fig. 9** bewegen kann, in welcher der Ringraum 96 zu einer verstärkten Drosselung des Übertritts von Druckluft von dem Vorratsanschluss 13 zu dem Ausgangsanschluss 20 führt.

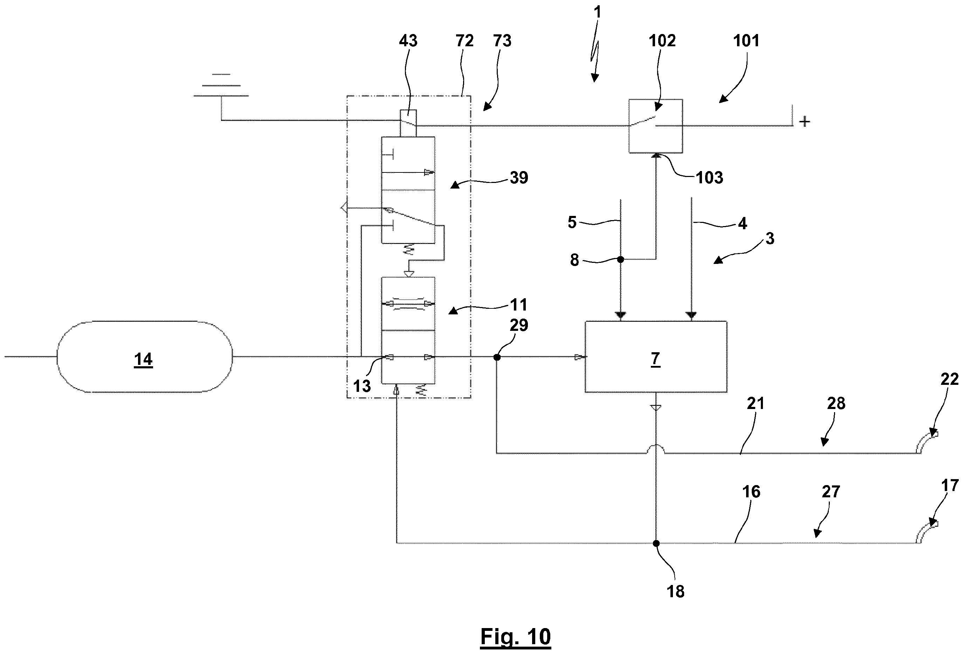

**Fig. 10** zeigt eine Bremseinrichtung 1, bei welcher (grundsätzlich den Figuren 3 bis 5 entsprechend) eine Vorsteuerung des Abrissventils 11 durch ein elektropneumatisches (Vorsteuer-) Ventil 39 erfolgt. Allerdings erfolgt hier die Erzeugung eines Steuersignals für den Steueranschluss 43 nicht über eine elektronische Steuereinheit 33. Vielmehr ist hier ein passiver elektrischer Steuerkreis 101 vorhanden, der den Steueranschluss 43 mit dem Steuersignal beaufschlagt. In dem Steuerkreis 101 ist ein Schalter 102 angeordnet. Der Schalter 102 verfügt über einen hydraulischen Steueranschluss 103, der über eine Verzweigung 8 mit der hydraulischen Bremsleitung 5 verbunden ist und somit von dem hydraulischen Bremsdruck bei Erreichen eines Schwellwertes, der insbesondere mit einer Vollbremsung korreliert, umgeschaltet wird, womit das Steuersignal erzeugt wird und das Ventil 39 umgeschaltet wird.

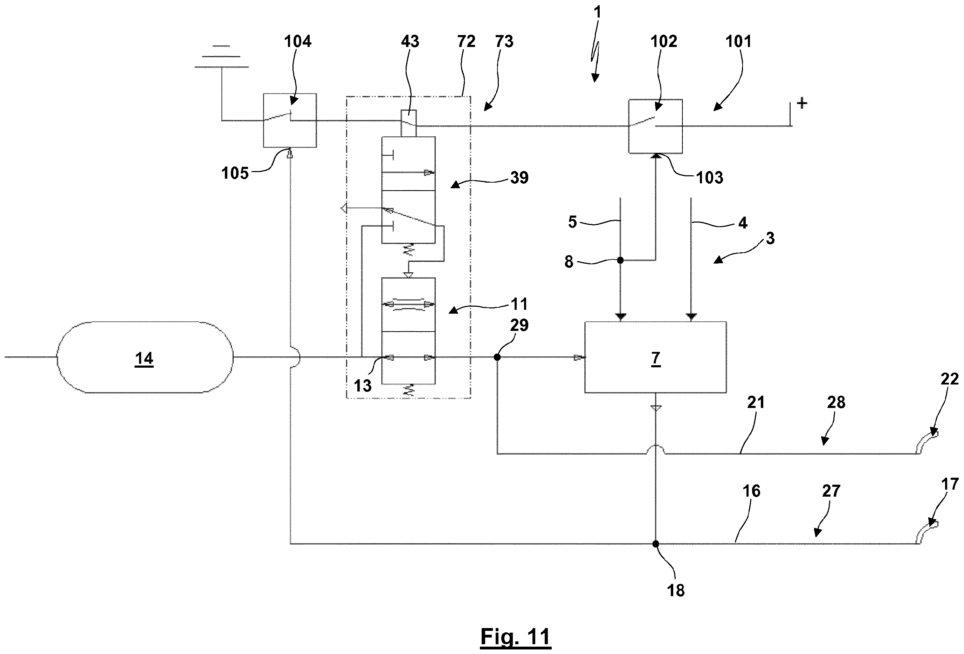

**Fig. 11** zeigt eine grundsätzlich Fig. 10 entsprechende Ausführungsform. Allerdings ist hier in dem Steuerkreis 101 ein weiterer Schalter 104 angeordnet. Der Schalter 104 verfügt über einen pneumatischen Steueranschluss 105. Der pneumatische Steueranschluss ist über eine Verzweigung 18 mit der Bremssteuerleitung 16 verbunden. Hierbei sind die Schwellwerte und die Schaltcharakteristika der Schalter 102, 104 vorzugsweise derart gewählt, dass die Erzeugung des Steuersignals dann erfolgt, wenn der hydraulische Bremsdruck einen Schwellwert überschreitet, aber gleichzeitig der pneumatische Bremsdruck infolge eines Defekts einen Schwellwert nicht erreicht.

Für die Ausführungsbeispiele gemäß Fig. 10 und 11 sind lediglich Schalter mit binären Schaltzuständen beschrieben worden. Es versteht sich, dass hier auch Schalter beliebiger Bauart und mit mehr als zwei Schaltzuständen oder auch ein Schaltrelais Einsatz finden können, welche dann je nach Schaltzustand auch ein Ventil 39 und ein Abrissventil 11 mit mehr als zwei Betriebszuständen ansteuern können.

In der vorliegenden Beschreibung wurden für Bauteile, welche sich hinsichtlich der Geometrie und/oder Funktion entsprechen oder ähneln, teilweise für unterschiedliche Ausführungsbeispiele dieselben Bezugszeichen verwendet.

### BEZUGSZEICHENLISTE

- 1: Bremseinrichtung
- 2: Zugfahrzeug
- 3: hydraulische Bremsanlage
- 4: hydraulische Bremsleitung
- 5: hydraulische Bremsleitung
- 6: hydraulischer Steueranschluss
- 7: Anhängersteuerventil
- 8: Verzweigung
- 9: hydraulischer Steueranschluss
- 10: hydraulischer Steueranschluss
- 11: Abrissventil
- 12: Anschluss
- 13: Vorratsanschluss
- 14: Vorratsbehälter
- 15: Ausgangsanschluss
- 16: Bremssteuerleitung
- 17: Kupplungskopf Bremse
- 18: Verzweigung
- 19: pneumatischer Steueranschluss
- 20: Ausgangsanschluss
- 21: Vorratsleitung
- 22: Kupplungskopf Vorrat
- 23: Zugfahrzeug-Ventileinheit
- 24: Verlauf
- 25: Druck
- 26: Zeit
- 27: Bremsleitungsteil
- 28: Vorratsleitungsteil
- 29: Verzweigung
- 30: Zweigleitung
- 31: Drucksensor
- 32: Leitung
- 33: elektronische Steuereinheit
- 34: Zweigleitung
- 35: Drucksensor
- 36: Leitung
- 37: Steueranschluss
- 38: Steuerleitung
- 39: Ventil
- 40: Vorratsanschluss
- 41: Entlüftung
- 42: elektropneumatisches Vorsteuerventil
- 43: Steueranschluss
- 44: Steuerleitung
- 45: Längsachse
- 46: Ringraum
- 47: Innenbohrung
- 48: Gehäuse
- 49: Nutgrund
- 50: Nut
- 51: Ventilkörper
- 52: Feder
- 53: Steuerraum
- 54: Steuerfläche
- 55: Steuerkante
- 56: Mündung
- 57: Ringraum
- 58: Mantelfläche
- 59: Drosselquerschnitt
- 60: Verbindungsbohrung
- 61: Drosselkörper
- 62: Zeitpunkt
- 63: Zeitpunkt
- 64: Zugfahrzeug-Ventilmodul
- 65: Feder
- 66: Eingangsanschluss
- 67: Entlüftungsanschluss
- 68: Entlüftung
- 69: Ausgangsanschluss
- 70: Steuerleitung
- 71: Feder
- 72: Gehäuse
- 73: Ventileinheit
- 74: Adapter-Gehäuse
- 75: Ventilkörpergehäuse
- 76: Abrissventilgehäuse
- 77: Anschlussstutzen
- 78: Drosselbohrung
- 79: Adapterkolbenkammer
- 80: Adapterkolben
- 81: Ventilkörper
- 82: Feder
- 83: Sitzventil
- 84: Sackloch
- 85: Fortsatz
- 86: Ventilkörpersitz
- 87: Querbohrung
- 88: Gehäusesitz
- 89: Feder
- 90: Verschlusskörper
- 91: Steuerraum
- 92: Ventilkörper
- 93: Sackloch-Ausnehmung
- 94: Feder
- 95: Steuerraum
- 96: Ringraum
- 97: Verbindungskanal
- 98: Einlasskammer
- 99: Einsatzkörper
- 100: Adapterkolbenfläche
- 101: Steuerkreis
- 102: Schalter
- 103: Steueranschluss
- 104: Schalter
- 105: Steueranschluss

## Patentansprüche

1. Bremseinrichtung (1) für ein Zugfahrzeug, insbesondere ein Traktor, mit
a) einem Anhängersteuerventil (7), welches in Abhängigkeit eines hydraulischen Bremsdrucks einen pneumatischen Bremssteuerdruck für einen Anhänger erzeugt, und
b) einem zwischen einem Kupplungskopf Vorrat (22) und einer Druckluftquelle (Vorratsbehälter 14) angeordneten Abrissventil (11), welches eine erste Betriebsstellung und eine zweite Betriebsstellung aufweist, wobei ein Drosselquerschnitt des Abrissventils (11) in der zweiten Betriebsstellung kleiner ist als in der ersten Betriebsstellung,
**dadurch gekennzeichnet, dass**
c) dem Abrissventil (11) ein Ventil (39) vorgeordnet ist, dessen Betriebsstellung von dem hydraulischen Bremsdruck abhängig ist, wobei
ca) das Abrissventil (11) und das dem Abrissventil (11) vorgeordnete Ventil (39) mechanisch voneinander entkoppelt sind,
cb) das dem Abrissventil (11) vorgeordnete Ventil (39) mit einem pneumatischen Steueranschluss (37) des Abrissventils (11) verbunden ist und
cc) in Abhängigkeit des an dem Steueranschluss (37) des Abrissventils (1) anliegenden Drucks das Abrissventil (11) in die zweite Betriebsstellung steuerbar ist.

2. Bremseinrichtung (1) nach Anspruch 1, **dadurch gekennzeichnet, dass** das dem Abrissventil (11) vorgeordnete Ventil (39) ein elektropneumatisches Ventil ist.

3. Bremseinrichtung (1) nach Anspruch 2, **dadurch gekennzeichnet, dass** das elektropneumatische Ventil über mindestens einen Schalter eines elektrischen Steuerkreises gesteuert wird, wobei
a) der oder ein Schalter (102) einen Steueranschluss aufweist, der mit einer hydraulischen Bremsleitung verbunden ist, und/oder
b) der oder ein Schalter (104) einen Steueranschluss aufweist, der mit einer pneumatischen Bremssteuerleitung verbunden ist.

4. Bremseinrichtung (1) nach Anspruch 2, **dadurch gekennzeichnet, dass** eine Steuereinheit (33) vorhanden ist, welche mit Steuerlogik ausgestattet ist, die ein elektrisches Steuersignal erzeugt, wobei das elektrische Steuersignal dem dem Abrissventil (11) vorgeordneten Ventil (39, 42) zugeführt wird.

5. Bremseinrichtung (1) nach Anspruch 3 oder 4, **dadurch gekennzeichnet, dass** ein Sensor (31) vorhanden ist, welcher den Druck in einer hydraulischen Bremsleitung (5) erfasst, und/oder ein Sensor (35) vorhanden ist, welcher den Druck in einer pneumatischen Bremssteuerleitung (16) erfasst.

6. Bremseinrichtung (1) nach Anspruch 5, **dadurch gekennzeichnet, dass** die Steuereinheit (33) mit Steuerlogik ausgestattet ist, die
a) auf Grundlage eines Vergleichs oder Verhältnisses
aa) des Signals des Sensors (31), welcher den Druck in der hydraulischen Bremsleitung (5) erfasst,
ab) mit oder zu dem Signal des Sensors (35), welcher den Druck in der pneumatischen Bremssteuerleitung (16) erfasst,
eine Abrisssituation erkennt, und/oder
b) für das Erkennen einer Abrisssituation
ba) das Ergebnis des Vergleichs oder des Verhältnisses des Signals des Sensors (31), welcher den Druck in der hydraulischen Bremsleitung (5) erfasst, mit oder zu dem Signal des Sensors (35), welcher den Druck in der pneumatischen Bremssteuerleitung (16) erfasst, mit einem Schwellwert vergleicht,
bb) eine Änderungsgeschwindigkeit des Signal des Sensors (35), welcher den Druck in der pneumatischen Bremssteuerleitung (16) erfasst, auswertet, und/oder
bc) eine Zeitdauer, welche das Verhältnis des Signals des Sensors (31), welcher den Druck in der hydraulischen Bremsleitung (5) erfasst, zu dem Signal des Sensors (35), welcher den Druck in der pneumatischen Bremssteuerleitung (16) erfasst, einen Schwellwert unter- oder überschreitet, auswertet.

7. Bremseinrichtung (1) nach einem der vorhergehenden Ansprüche, **dadurch gekennzeichnet, dass** das Anhängersteuerventil (7), das Abrissventil (11), mindestens ein Sensor (31; 35), das dem Abrissventil vorgeordnete Ventil und/oder die Steuereinheit (33) in eine Zugfahrzeug-Ventileinheit (23) integriert sind.

8. Bremseinrichtung (1) nach einem der Ansprüche 4 bis 7, **dadurch gekennzeichnet, dass** die Steuereinheit (33) mit Steuerlogik ausgestattet ist, die unter Verwendung unterschiedlicher Abhängigkeiten, Kennlinien oder Kennfelder für unterschiedliche Typen hydraulischer Bremsanlagen (3) unterschiedliche Steuersignale erzeugt.

9. Gruppe von Bremseinrichtungen (1) mit
a) einer ersten Teilgruppe mit Bremseinrichtungen (1) nach einem der Ansprüche 4 bis 8, die für einen ersten Typ von Zugfahrzeugen oder Traktoren mit einem ersten hydraulischen Betriebsdruck bestimmt sind, und
b) einer zweiten Teilgruppe mit Bremseinrichtungen (1) nach einem der Ansprüche 4 bis 8, die für einen zweiten Typ von Zugfahrzeugen oder Traktoren mit einem zweiten hydraulischen Betriebsdruck, der von dem ersten hydraulischen Betriebsdruck abweicht, bestimmt sind,
c) wobei in den Bremseinrichtungen der beiden Teilgruppen dieselben Abrissventile (11) vorhanden sind und
d) Steuereinheiten (33) der Bremseinrichtungen der beiden Teilgruppen Steuerlogik aufweisen, welche das Steuersignal, welches das Abrissventil (11) in einer Abrisssituation in die zweite Betriebsstellung steuert, in Abhängigkeit des der jeweiligen Teilgruppe zugeordneten hydraulischen Betriebsdrucks ermittelt.

10. Bremseinrichtung (1) nach Anspruch 1, **dadurch gekennzeichnet, dass** das dem Abrissventil (11) vorgeordnete Ventil (39) ein hydraulisch-pneumatisches Ventil ist.

11. Bremseinrichtung (1) nach Anspruch 10, **dadurch gekennzeichnet, dass** das dem Abrissventil (11) vorgeordnete Ventil (39) eine Adapterkolbenfläche (100) aufweist, an welcher der Druck eines hydraulischen Steueranschlusses (10) anliegt und eine Umschaltkraft erzeugt, mittels welcher das dem Abrissventil (11) vorgeordnete Ventil (39) umschaltbar ist.

12. Bremseinrichtung (1) nach Anspruch 11, **dadurch gekennzeichnet, dass** das dem Abrissventil (11) vorgeordnete Ventil (39) einen Ventilkörper (81) und einen separat von dem Ventilkörper (81) ausgebildeten Adapterkolben (80) aufweist, wobei der Adapterkolben (80)
a) zur Übertragung der Umschaltkraft mechanisch mit dem Ventilkörper (81) gekoppelt ist und
b) die Adapterkolbenfläche (100) ausbildet.

13. Bremseinrichtung (1) nach Anspruch 12, **dadurch gekennzeichnet, dass** ein Gehäuse des dem Abrissventil (11) vorgeordneten Ventils (39) mit einem Ventilkörper-Gehäuse (75) gebildet ist, in welchem der Ventilkörper (81) geführt ist, und mit einem Adapter-Gehäuse (74) gebildet ist, in welchem der Adapterkolben (80) geführt ist, wobei das Ventilkörper-Gehäuse (75) und das Adapter-Gehäuse (74) über eine mechanische Schnittstelle miteinander verbunden sind, durch welche die Umschaltkraft übertragen wird.

14. Gruppe mit Bremseinrichtungen (1) für eine Bremsanlage eines hydraulisch gebremsten Zugfahrzeugs und eines mit dem Zugfahrzeug gekoppelten pneumatisch gebremsten Anhängers,
a) mit einer ersten Teilgruppe mit Bremseinrichtungen (1) nach einem der Ansprüche 11 bis 13, bei welchen die den Abrissventilen (11) vorgeordneten Ventile (39) eine erste Adapterkolbenfläche (100) aufweisen und
b) mit einer zweiten Teilgruppe mit Bremseinrichtungen (1) nach einem der Ansprüche 11 bis 13, bei welchen die den Abrissventilen (11) vorgeordneten Ventile (39) eine zweite Adapterkolbenfläche (100) aufweisen,
c) wobei die erste und die zweite Adapterkolbenfläche (100) unterschiedlich groß sind.

15. Gruppe nach Anspruch 14 mit Bremseinrichtungen (1) nach Anspruch 13, **dadurch gekennzeichnet, dass** die den Abrissventilen (11) vorgeordneten Ventile (39) der ersten und zweiten Teilgruppe
a) gleiche Ventilkörper-Gehäuse (75) und gleiche Ventilkörper (81) und
b) unterschiedliche Adapter-Gehäuse (74) und unterschiedliche in den Adapter-Gehäusen (74) geführte Adapterkolben (80)
aufweisen.

16. Bremseinrichtung (1) nach einem der Ansprüche 1 bis 8 oder 10 bis 13, **dadurch gekennzeichnet, dass**
a) das Abrissventil (11) in Schieberbauart ausgebildet ist und
b) das dem Abrissventil (11) vorgeordnete Ventil (39) in Sitzventil-Bauart ausgebildet ist.

17. Bremseinrichtung (1) nach einem der Ansprüche 1 bis 8, 10 bis 13 oder 16, **dadurch gekennzeichnet, dass** ein Ventilkörper (92) des Abrissventils (11) und ein Ventilkörper (81) des dem Abrissventil (11) vorgeordneten Ventils (39) unterschiedlich große Stellwege aufweisen.

18. Bremseinrichtung (1) nach einem der Ansprüche 1 bis 8, 10 bis 13 oder 16 bis 17, **dadurch gekennzeichnet, dass** das dem Abrissventil (11) vorgeordnete Ventil (39) in einer Öffnungsstellung
a) eine Vorratsleitung oder
b) eine pneumatische Bremssteuerleitung (16)
mit dem Steueranschluss (37) des Abrissventils (11) verbindet.

19. Bremseinrichtung (1) nach einem der Ansprüche 1 bis 8, 10 bis 13 oder 16 bis 18, **dadurch gekennzeichnet, dass** das Abrissventil (11) und das dem Abrissventil (11) vorgeordnete Ventil (39) eine Ventileinheit (73) bilden.

20. Bremseinrichtung (1) nach einem der Ansprüche 1 bis 8, 10 bis 13 oder 16 bis 19, **dadurch gekennzeichnet, dass** das Abrissventil in Schieberbauart ausgebildet ist, wobei der einen Schieber bildende Ventilkörper in der zweiten Betriebsstellung in einem Teilumfangsbereich zur Anlage an einen Ventilsitz kommt, während in einem anderen Teilumfangsbereich der Drosselquerschnitt des Abrissventils (11) gebildet ist.

## Claims

1. Brake device (1) for a drawing vehicle, in particular an agricultural tractor, with
a) a trailer control valve (7) which generates a pneumatic brake control pressure for a trailer in dependence on a hydraulic brake pressure and
b) a breakaway valve (11) which is arranged between a supply coupling head (22) and a pressurised air source (supply reservoir 14) and comprises a first operating positon and a second operating position, a throttle cross section of the breakaway valve (11) being smaller in the second operating position than in the first operating position,
**characterised in that**
c) a valve (39) is arranged upstream from the breakaway valve (11), the operating position of the valve (39) being dependent on the hydraulic brake pressure,
ca) the breakaway valve (11) and the valve (39) which is arranged upstream from the breakaway valve (11) being mechanically uncoupled from each other,
cb) the valve (39) which is arranged upstream from the breakaway valve (11) being connected to a pneumatic control port (37) of the breakaway valve (11) and
cc) the breakaway valve (11) being controllable into the second operating position dependent on the pressure biasing the control port (37) of the breakaway valve (1).

2. Brake device (1) of claim 1, **characterised in that** the valve (39) which is arranged upstream from the breakaway valve (11) is an electro-pneumatical valve.

3. Brake device (1) of claim 2, **characterised in that** the electro-pneumatical valve is controlled by at least one switch of an electric control circuit,
a) the or a switch (102) comprising a control port which is connected to a hydraulic brake line and/or
b) the or a switch (104) comprising a control port which is connected to a pneumatic brake control line.

4. Brake device (1) of claim 2, **characterised in that** a control unit (33) is provided which comprises control logic which generates an electric control signal, the electric control signal being supplied to the valve which is arranged upstream from the breakaway valve (11).

5. Brake device (1) of claim 3 or 4, **characterised in that** a sensor (31) is provided which senses the pressure in a hydraulic brake line (5) and a sensor (35) is provided which senses the pressure in a pneumatic brake control line (16).

6. Brake device (1) of claim 5, **characterised in that** the control unit (33) comprises control logic which
a) detects a breakaway situation on the basis of a comparison or the relation
aa) of the signal of the sensor (31) which senses the pressure in the hydraulic brake line (5),
ab) with or and the signal of the sensor (35) which senses the pressure in the pneumatic brake control line (16)
and/or
b) for the detection of a breakaway situation
ba) compares the result of the comparison or of the relation of the signal of the sensor (31) which senses the pressure in the hydraulic brake line (5) with or and the signal of the sensor (35) which senses the pressure in the pneumatic brake control line (16) to a threshold,
bb) evaluates a changing velocity of the signal of the senor (35) which senses the pressure in the pneumatic brake control line (16) and/or
bc) evaluates a time duration for which the relation of the signal of the sensor (31) which senses the pressure in the hydraulic brake line (5) and the signal of the sensor (35) which senses the pressures on the pneumatic brake control line (16) falls below or exceeds a threshold.

7. Brake device (1) of one of the preceding claims, **characterised in that** the trailer control valve (7), the breakaway valve (11), at least one sensor (31; 35), the valve which is arranged upstream from the breakaway valve and/or the control unit (33) is/are integrated into a drawing vehicle valve unit (23).

8. Brake device (1) of one of claims 4 to 7, **characterised in that** the control unit (33) comprises control logic which generates different control signals under use of different dependencies, characteristic curves or characteristic maps for different types of hydraulic brake systems (3).

9. Group of brake devices (1) with
a) a first group part comprising brake devices (1) of one of claims 4 to 8 which are designated for a first type of drawing vehicles or agricultural tractors having a first hydraulic operational pressure and
b) a second group part comprising brake devices (1) of one of claims 4 to 8 which are designated for a second type of drawing vehicles or agricultural tractors having a second hydraulic operational pressure which differs from the first hydraulic operational pressure,
c) in the brake devices of the two group parts the same breakaway valves (11) being present and
d) control units (33) of the brake devices of the two group parts comprising control logic which determines the control signal which controls the breakaway valve (11) in a breakaway situation into the second operating position dependent on the hydraulic operational pressure associated with the respective group part.

10. Brake device (1) of claim 1, **characterised in that** the valve (39) which is arranged upstream from the breakaway valve (11) is a hydraulic-pneumatic valve.

11. Brake device (1) of claim 10, **characterised in that** the valve (39) which is arranged upstream from the breakaway valve (11) comprises an adaptor piston surface (100) which is biased by the pressure at a hydraulic control port (10) and which generates a switching force by which it is possible to switch the valve (39) which is arranged upstream from the breakaway valve (11).

12. Brake device (1) of claim 11, **characterised in that** the valve (39) which is arranged upstream from the breakaway valve (11) comprises a valve body (81) and an adaptor piston (80) being formed separately from the valve body (81), the adaptor piston (80)
a) being mechanically coupled to the valve body (81) for transmitting the switching force and
b) forming the adaptor piston surface (100).

13. Brake device (1) of claim 12, **characterised in that** a housing of the valve (39) which is arranged upstream from the breakaway valve (11) comprises a valve body housing (75) wherein the valve body (81) is guided and an adaptor housing (74) wherein the adaptor piston (80) is guided, the valve body housing (75) and the adaptor housing (74) being coupled to each other by a mechanical interface by which the switching force is transmitted.

14. Group of brake devices (1) for a brake system of a hydraulically braked drawing vehicle and a pneumatically braked trailer coupled to the drawing vehicle
a) with a first group part comprising brake devices (1) of one of claims 11 to 13 wherein the valves which are arranged upstream from the breakaway valves (11) comprise a first adaptor piston surface (100) and
b) with a second group part comprising brake devices (1) of one of claims 11 to 13 wherein the valves (39) which are arranged upstream from the breakaway valves (11) comprise a second adaptor piston surface (100),
c) the first and second adaptor piston surfaces (100) having different sizes.

15. Group of claim 14 comprising brake devices (1) according to claim 13, **characterised in that** the valves (39) which are arranged upstream from the breakaway valves (11) of the first and second group part comprise
a) the same valve body housings (75) and the same valve bodies (81) and
b) different adapter housings (74) and different adaptor pistons (80) which are guided in the adaptor housings (74).

16. Brake device (1) of one of claims 1 to 8 or 10 to 13, **characterised in that**
a) the breakaway valve (11) has a sliding valve design and
b) the valve (39) which is arranged upstream from the breakaway valve (11) has a seating valve design.

17. Brake device (1) of one of claims 1 to 8, 10 to 13 or 16, **characterised in that** a valve body (92) of the breakaway valve (11) and a valve body (81) of the valve (39) which is arranged upstream from the breakaway valve (11) have switching displacements of different lengths.

18. Brake device (1) of one of claims 1 to 8, 10 to 13 or 16 to 17, **characterised in that** in an open position the valve (39) which is arranged upstream from the breakaway valve (11) connects
a) a supply line or
b) a pneumatic brake control line (16)
to the control port (37) of the breakaway valve (11).

19. Brake device (1) of one of claims 1 to 8, 10 to 13 or 16 to 18, **characterised in that** the breakaway valve (11) and the valve (39) which is arranged upstream from the breakaway valve (11) form a valve unit (73).

20. Brake device (1) of one of claims 1 to 8, 10 to 13 or 16 to 19, **characterised in that** the breakaway valve has a sliding valve design, the valve body which forms a slider contacting a valve seat in the second operating position in a part of the circumference whereas in another part of the circumference the throttle cross section of the breakaway valve (11) is formed.

## Revendications

1. Dispositif de freinage (1) pour un véhicule tracteur, plus particulièrement un tracteur, avec
a) une soupape de commande de remorque (7), qui produit, en fonction d'une pression de freinage hydraulique, une pression de commande de freinage pour une remorque et
b) une soupape d'arrachement (11), disposée entre un réservoir de tête d'attelage (22) et une source d'air comprimé (réservoir 14), qui présente une première position de fonctionnement et une deuxième position de fonctionnement, une section d'étranglement de la soupape d'arrachement (11) étant plus petite dans la deuxième position de fonctionnement que dans la première position de fonctionnement,
**caractérisé en ce que**
c) en amont de la soupape d'arrachement (11) est disposée une soupape (39) dont la position de fonctionnement dépend de la pression de freinage hydraulique,
ca) la soupape d'arrachement (11) et la soupape (39) disposée en amont de la soupape d'arrachement (11) étant découplée mécaniquement entre elles,
cb) la soupape (39) disposée en amont de la soupape d'arrachement (11) étant reliée avec un raccord de commande (37) de la soupape d'arrachement (11) et
cc) la soupape d'arrachement (11) pouvant être mise dans la deuxième position de fonctionnement en fonction de la pression appliquée au raccord de commande (37) de la soupape d'arrachement (1).

2. Dispositif de freinage (1) selon la revendication 1, **caractérisé en ce que** la soupape (39) disposée en amont de la soupape d'arrachement (11) est une soupape électropneumatique.

3. Dispositif de freinage (1) selon la revendication 2, **caractérisé en ce que** la soupape électropneumatique est contrôlée par l'intermédiaire d'au moins un commutateur d'un circuit de commande électrique,
a) le ou un commutateur (102) comprenant un raccord de commande qui est relié à une conduite de freinage hydraulique et/ou
b) le ou un commutateur (104) comprenant un raccord de commande qui est relié à une conduite de freinage pneumatique.

4. Dispositif de freinage (1) selon la revendication 2, **caractérisé en ce qu'**une unité de commande (33) est prévue, qui est équipée d'une logique de commande, qui produit un signal de commande électrique, le signal de commande électrique étant appliquée à la soupape (39, 42) disposée en amont de la soupape d'arrachement (11).

5. Dispositif de freinage (1) selon la revendication 3 ou 4, **caractérisé en ce qu'**un capteur (31) est prévu, qui mesure la pression dans une conduite de freinage hydraulique (5), et/ou un capteur (35) est prévu, qui mesure la pression dans une conduite de commande de freinage pneumatique (16).

6. Dispositif de freinage (1) selon la revendication 5, **caractérisé en ce que** l'unité de commande (33) est équipée d'une logique de commande qui
a) sur la base d'une comparaison ou d'un rapport
aa) du signal du capteur (31), qui mesure la pression dans la conduite de freinage hydraulique (5),
ab) avec le signal du capteur (35), qui mesure la pression dans conduite de freinage pneumatique (16),
détecte une situation d'arrachement et/ou
b) pour la détection d'une situation d'arrachement
ba) compare le résultat de la comparaison ou du rapport du signal de capteur (31), qui mesure la pression dans la conduite de freinage hydraulique (5) avec le signal du capteur (35), qui mesure la pression dans la conduite de freinage pneumatique (16), avec une valeur seuil,
bb) analyse une vitesse de variation du signal du capteur (35), qui mesure la pression dans la conduite de commande de freinage pneumatique (16) et/ou
bc) analyse une durée pendant laquelle le rapport du signal de capteur (31), qui mesure la pression dans la conduite de freinage hydraulique (5) avec le signal du capteur (35), qui mesure la pression dans la conduite de freinage pneumatique (16), passe en dessous ou dépasse une valeur seuil.

7. Dispositif de freinage (1) selon l'une des revendications précédentes, **caractérisé en ce que** la soupape de commande de remorque (7), la soupape d'arrachement (11), au moins un capteur (31 ; 35), la soupape disposée en amont de la soupape d'arrachement et/ou l'unité de commande (33) sont intégrés dans une unité à soupapes du véhicule tracteur (23).

8. Dispositif de freinage (1) selon l'une des revendications 4 à 7, **caractérisé en ce que** l'unité de commande (33) est équipée d'une logique de commande qui génère, à l'aide de différentes relations de dépendances, de courbes caractéristiques ou de diagrammes caractéristiques, des signaux de commande différents pour différents types d'installations de freinage hydrauliques (3).

9. Groupe de dispositifs de freinage (1) avec
a) un premier sous-groupe de dispositifs de freinage (1) selon l'une des revendications 4 à 8, qui, pour un premier type de véhicules tracteurs ou de tracteurs, sont déterminés avec une première pression de service hydraulique et
b) un deuxième sous-groupe de dispositifs de freinage (1) selon l'une des revendications 4 à 8, qui, pour un deuxième type de véhicules tracteurs ou de tracteurs, sont déterminés avec une deuxième pression de service hydraulique qui est différent de la première pression de service hydraulique,
c) les mêmes soupapes d'arrachement (11) étant présentes dans les dispositifs de freinage des deux sous-groupes et
d) les unités de commande (33) des dispositifs de freinage des deux sous-groupes comprenant une logique de commande qui détermine le signal de commande qui contrôle la soupape d'arrachement (11) dans une situation d'arrachement vers la deuxième position de fonctionnement, en fonction de la pression de service hydraulique correspondant au sous-groupe concerné.

10. Dispositif de freinage (1) selon la revendication 1, **caractérisé en ce que** la soupape (39) disposée en amont de la soupape d'arrachement (11) est une soupape hydraulique-pneumatique.

11. Dispositif de freinage (1) selon la revendication 10, **caractérisé en ce que** la soupape (39) disposée en amont de la soupape d'arrachement (11) comprend une surface de piston adaptateur (100) contre laquelle la pression d'un raccord de commande hydraulique (10) s'appuie et produit une force de commutation à l'aide de laquelle la soupape (39) disposée en amont de la soupape d'arrachement (11) peut être commutée.

12. Dispositif de freinage (1) selon la revendication 11, **caractérisé en ce que** la soupape (39) disposée en amont de la soupape d'arrachement (11) comprend un corps de soupape (81) et un piston adaptateur (80) réalisé séparément du corps de soupape (81), le piston adaptateur (80)
a) étant couplé mécaniquement au corps de soupape (81) pour la transmission de la force de commutation et
b) formant la surface de piston adaptateur (100).

13. Dispositif de freinage (1) selon la revendication 12, **caractérisé en ce qu'**un boîtier de la soupape (39) disposée en amont de la soupape d'arrachement (11) est constitué d'un boîtier de corps de soupape (75), dans lequel est guidé le corps de soupape (81), et d'un boîtier adaptateur (74), dans lequel est guidé le piston adaptateur (80), le boîtier de corps de soupape (75) et le boîtier adaptateur (74) étant reliés entre eux par l'intermédiaire d'une interface mécanique qui permet de transmettre la force de commutation.

14. Groupe avec des dispositifs de freinage (1) pour une installation de freinage d'un véhicule tracteur freiné hydrauliquement et d'une remorque freinée pneumatiquement couplée avec le véhicule tracteur,
a) avec un premier sous-groupe avec des dispositifs de freinage (1) selon l'une des revendications 11 à 13, dans lesquels les soupapes (39) disposées en amont des soupapes d'arrachement (11) comprennent une première surface de piston adaptateur (100) et
b) avec un deuxième sous-groupe avec des dispositifs de freinage (1) selon l'une des revendications 11 à 13, dans lesquels les soupapes (39) disposées en amont des soupapes d'arrachement (11) comprennent une deuxième surface de piston adaptateur (100),
c) les première et deuxième surfaces de piston adaptateur (100) étant de tailles différentes.

15. Groupe selon la revendication 14 avec des dispositifs de freinage (1) selon la revendication 13, **caractérisé en ce que** les soupapes (39) disposées en amont des soupapes d'arrachement (11) des premier et deuxième sous-groupes
a) comprennent les mêmes boîtiers de corps de soupapes (75) et les même corps de soupapes(81) et
b) comprennent des boîtiers adaptateurs (74) différents et des pistons adaptateurs (80) différents guidés dans les boîtiers adaptateurs (74).

16. Dispositif de freinage (1) selon l'une des revendications 1 à 8 ou 10 à 13, **caractérisé en ce que**
a) la soupape d'arrachement (11) est conçu sous la forme d'un coulisseau et
b) la soupape (39) disposée en amont de la soupape d'arrachement (11) est conçue sous la forme d'une soupape à siège.

17. Dispositif de freinage (1) selon l'une des revendications 1 à 8, 10 à 13 ou 16, **caractérisé en ce qu'**un corps de soupape (92) de la soupape d'arrachement (11) et un corps de soupape (81) de la soupape (39) disposée en amont de la soupape d'arrachement (11) présentent des courses de différentes longueurs.

18. Dispositif de freinage (1) selon l'une des revendications 1 à 8, 10 à 13 ou 16 à 17, **caractérisé en ce que** la soupape (39) disposée en amont de la soupape d'arrachement (11) relie, dans une position d'ouverture
a) une conduite de réservoir ou
b) une conduite de commande de freinage pneumatique (16)
avec le raccord de commande (37) de la soupape d'arrachement (11).

19. Dispositif de freinage (1) selon l'une des revendications 1 à 8, 10 à 13 ou 16 à 18, **caractérisé en ce que** la soupape d'arrachement (11) et la soupape (39) disposée en amont de la soupape d'arrachement (11) constituent une unité à soupapes (73).

20. Dispositif de freinage (1) selon l'une des revendications 1 à 8, 10 à 13 ou 16 à 19, **caractérisé en ce que** la soupape d'arrachement est conçue sous la forme d'un coulisseau, le corps de soupape constituant un coulisseau venant en appui, dans la deuxième position de fonctionnement, contre un siège de soupape dans une zone de circonférence partielle, tandis que, dans une autre zone de circonférence partielle, est réalisée la section d'étranglement de la soupape d'arrachement (11).
